(19)

**Europäisches Patentamt**
**European Patent Office**
**Office européen des brevets**

(11) **EP 4 787 991 A1**

(12) **EUROPEAN PATENT APPLICATION**
published in accordance with Art. 153(4) EPC

(43) Date of publication:
**05.08.2026 Bulletin 2026/32**

(21) Application number: **23953324.3**

(22) Date of filing: **25.09.2023**

(51) International Patent Classification (IPC):
***H04W 72/04*** (2023.01)

(52) Cooperative Patent Classification (CPC):
**H04W 72/04**

(86) International application number:
**PCT/CN2023/121170**

(87) International publication number:
**WO 2025/065159 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **GUANGDONG OPPO MOBILE**
**TELECOMMUNICATIONS**
**CORP., LTD.**
**Dongguan, Guangdong 523860 (CN)**

(72) Inventor: **XU, Jing**
**Dongguan, Guangdong 523860 (CN)**

(74) Representative: **Grassi, Stefano**
**Bugnion S.p.A.**
**Viale Lancetti, 17**
**20158 Milano (IT)**

(54) **CHANNEL DETECTION METHOD, TERMINAL DEVICE, AND NETWORK DEVICE**

(57) Provided are a channel detection method, a terminal device, and a network device. The method comprises: a terminal device determines, on the basis of one or more of the following parameters, a PDCCH detection capability corresponding to a first carrier among a plurality of carriers: a first parameter, which is used for indicating the size of the bandwidth of the first carrier; a second parameter, which is used for indicating an allocation coefficient of the PDCCH detection capability corresponding to the first carrier; and a third parameter, which is used for indicating the overall capability of PDCCH detection corresponding to a target carrier among the plurality of carriers, the target carrier and the first carrier having the same carrier attribute. In a multi-carrier system, according to embodiments of the present application, a PDCCH detection capability corresponding to a carrier is determined on the basis of factors such as the bandwidth size of the carrier of a terminal device, so that the allocation of PDCCH detection capabilities on each carrier can be more reasonable.

A terminal device determines a PDCCH detection capability corresponding to a first carrier among multiple carriers according to one or more of: a first parameter, a second parameter, and a third parameter 210

**FIG. 2**

EP 4 787 991 A1

**Description**

TECHNICAL FIELD

The present disclosure relates to the technical field of communications, and more particularly to, methods for channel detection, a terminal device, and a network device.

BACKGROUND

Physical Downlink Control Channel (PDCCH) detection capability is an important indicator of a terminal device. In a multi-carrier system, how to reasonably allocate the PDCCH detection capability of the terminal device on each carrier is a problem to be solved.

SUMMARY

Embodiments of the present disclosure provide methods for channel detection, a terminal device, and a network device. Hereinafter, various aspects involved in the embodiments of the present disclosure are described in detail.
In a first aspect, there is provided a method for channel detection including a following operation. A terminal device determines a PDCCH detection capability corresponding to a first carrier among multiple carriers according to one or more of a first parameter, a second parameter and a third parameter. The first parameter is used to indicate a size of a bandwidth of a first carrier; the second parameter is used to indicate an allocation coefficient of a PDCCH detection capability corresponding to the first carrier; and the third parameter is used to indicate a total PDCCH detection capability corresponding to target carrier(s) among the multiple carriers. The target carrier has a same carrier attribute as the first carrier.
In a second aspect, there is provided a method for channel detection including a following operation. A network device determines a corresponding PDCCH detection capability when a terminal device performs detection on a first carrier among multiple carriers, according to one or more of a first parameter, a second parameter and a third parameter. The first parameter is used to indicate a size of a bandwidth of a first carrier; the second parameter is used to indicate an allocation coefficient of a PDCCH detection capability corresponding to the first carrier; and the third parameter is used to indicate a total PDCCH detection capability corresponding to target carrier(s) among the multiple carriers. The target carrier has a same carrier attribute as the first carrier.
In a third aspect, there is provided a terminal device including a determining module. The determining module is configured to determine a PDCCH detection capability corresponding to a first carrier among multiple carriers according to one or more of a first parameter, a second parameter and a third parameter. The first parameter is used to indicate a size of a bandwidth of a first carrier; the second parameter is used to indicate an allocation coefficient of a PDCCH detection capability corresponding to the first carrier; and the third parameter is used to indicate a total PDCCH detection capability corresponding to target carrier(s) among the multiple carriers. The target carrier has a same carrier attribute as the first carrier.
In a fourth aspect, there is provided a network device including a determining module. The determining module is configured to determine a corresponding PDCCH detection capability when a terminal device performs detection on a first carrier among multiple carriers, according to one or more of a first parameter, a second parameter and a third parameter. The first parameter is used to indicate a size of a bandwidth of a first carrier; the second parameter is used to indicate an allocation coefficient of a PDCCH detection capability corresponding to the first carrier; and the third parameter is used to indicate a total PDCCH detection capability corresponding to target carrier(s) among the multiple carriers. The target carrier has a same carrier attribute as the first carrier.
In a fifth aspect, there is provided a terminal device including a transceiver, a memory and a processor, wherein the memory is configured to store a program, and the processor is configured to invoke the program in the memory and control the transceiver to receive or send a signal, to enable the terminal device to perform the method of the first aspect.
In a sixth aspect, there is provided a network device including a transceiver, a memory and a processor, wherein the memory is configured to store a program, and the processor is configured to invoke the program in the memory and control the transceiver to receive or send a signal, to enable the network device to perform the method of the second aspect.
In a seventh aspect, there is provided a device including a processor configured to invoke a program from a memory, to enable the device to perform the method of the first aspect or the method of the second aspect.
In an eighth aspect, there is provided a chip including a processor configured to invoke a program from a memory, to enable a device on which the chip is mounted to perform the method of the first aspect or the method of the second aspect.
In a ninth aspect, there is provided a computer-readable storage medium having stored thereon a program that causes a computer to perform the method of the first aspect or the method of the second aspect.

In a tenth aspect, there is provided a computer program product including a program that causes a computer to perform the method of the first aspect or the method of the second aspect.

In an eleventh aspect, there is provided a computer program that causes a computer to perform the method of the first aspect or the method of the second aspect.

In the multi-carrier system, according to the embodiments of the present disclosure, the PDCCH detection capability corresponding to the carrier is determined according to factors such as the bandwidth size of the carrier, so that the allocation of the PDCCH detection capability on each carrier can be more reasonable.

BRIEF DESCRIPTION OF THE DRAWINGS

FIG. 1 is an example diagram of a system architecture of a wireless communication system to which an embodiment of the present disclosure is applied.
FIG. 2 is a schematic flowchart of a method for channel detection according to an embodiment of the present disclosure.
FIG. 3 is a schematic flowchart of a method for channel detection according to another embodiment of the present disclosure.
FIG. 4 is a schematic structural diagram of a terminal device according to an embodiment of the present disclosure.
FIG. 5 is a schematic structural diagram of a network device according to an embodiment of the present disclosure.
FIG. 6 is a schematic structural diagram of a device according to an embodiment of the present disclosure.

DETAILED DESCRIPTION

Hereinafter, technical solutions in the present disclosure are described with reference to the accompanying drawings.

Architecture of a communication system

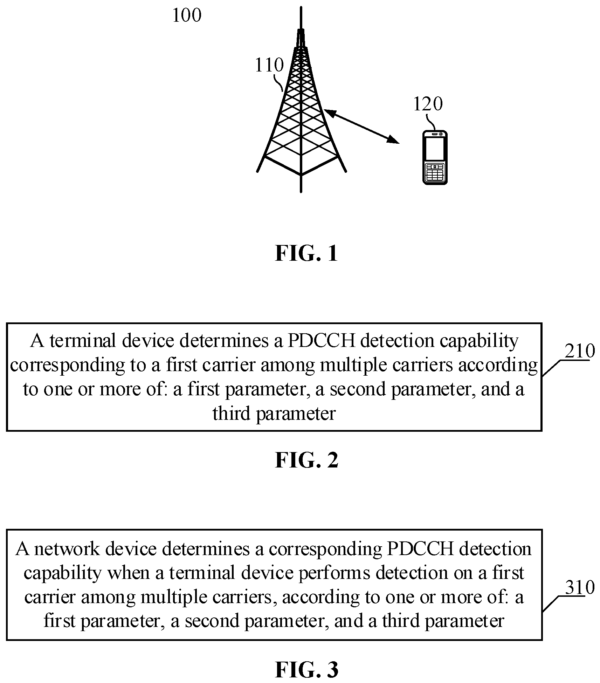

FIG. 1 is an example diagram of a system architecture of a wireless communication system 100 to which an embodiment of the present disclosure is applied. The wireless communication system 100 includes a network device 110 and a terminal device 120. The network device 110 may be a device that communicates with the terminal device 120. The network device 110 may provide communication coverage for a particular geographic area and may communicate with terminal devices 120 located within the coverage.

FIG. 1 exemplarily illustrates one network device and two terminal devices. Optionally, the wireless communication system 100 may include one or more network devices 110, and/or one or more network terminal devices 120. For one network device 110, the one or more terminal devices 120 may all be located within the network coverage of the network device 110, or may all be located outside the network coverage of the network device 110, or a part of the one or more terminal devices 120 may be located within the coverage of the network device 110, and the other part of the one or more terminal devices 120 may be located outside the network coverage of the network device 110, which is not limited in the embodiment of the present disclosure.

Optionally, the wireless communication system 100 may also include other network entities, such as, network controllers, mobility management entities, etc., which are not limited by the embodiments of the present disclosure.

It is to be understood that the technical solutions of the embodiments of the present disclosure may be applied to various communication systems, such as: a 5th Generation (5G) system or a New Radio (NR) system, a Long Term Evolution (LTE) system, an LTE Frequency Division Duplex (FDD) system, an LTE Time Division Duplex (TDD) system, etc. The technical solutions provided by the present disclosure may also be applied to future communication systems, such as, a 6th generation mobile communication system, a satellite communication system, etc.

The terminal device in the embodiments of the present disclosure may also be referred to as User Equipment (UE), an access terminal, a user unit, a user station, a mobile platform, a Mobile Station (MS), a Mobile Terminal (MT), a remote station, a remote terminal, a mobile device, a user terminal, a terminal, a wireless communication device, a user agent or a user device, etc. The terminal device in the embodiments of the present disclosure may be a device that provides voice and/or data connectivity to a user, and may be used to connect people, objects and machines, such as a handheld device with wireless connection function, a vehicle-mounted device, etc. The terminal device in the embodiments of the present disclosure may be a mobile phone, a Pad, a notebook computer, a palmtop computer, a Mobile Internet Device (MID), a wearable device, a Virtual Reality (VR) device, a Augmented Reality (AR) device, a wireless terminal in industrial control, a wireless terminal in self driving, a wireless terminal in remote medical surgery, a wireless terminal in smart grid, a wireless terminal in transportation safety, a wireless terminal in smart city, or a wireless terminal in smart home, etc. Optionally, the UE may be used to act as a base station. For example, the UE may act as a scheduling entity that provides sidelink signal(s) between UEs in the Vehicle to Everything (V2X), the Device to Device (D2D) or the like. For example, a cellular phone communicates with a car by using the sidelink signal(s). The cellular phone communicates with the device in smart home without relaying communication signal(s) by the base station.

The network device in the embodiments of the present disclosure may be a device configured to communicate with a terminal device, and the network device may also be referred to as an access network device or a radio access network device, for example, the network device may be a base station. The network device in the embodiments of the present disclosure may refer to a Radio Access Network (RAN) node (or device) that accesses a terminal device to a wireless network. The base station may broadly cover or be replaced with following names, such as, Node B (NodeB), evolved NodeB (eNB), next generation NodeB (gNB), relay station, access point, Transmitting and Receiving Point (TRP), Transmitting Point (TP), Master eNB (MeNB), Secondary eNB (SeNB), Multi-standard Radio (MSR) node, home base station, network controller, access node, wireless node, Access Point (AP), transmission node, transceiver node, Base Band Unit (BBU), Remote Radio Unit (RRU), Active Antenna Unit (AAU), Remote Radio Head (RRH), Central Unit (CU), Distributed Unit (DU), positioning node, etc. The base station may be a macro base station, a micro base station, a relay node, a donor node or a combination thereof. The base station may also be a communication module, a modem or a chip provided inside the device or apparatus. The base station may also be a mobile switching center and a device that undertakes a function of the base station in D2D communication, V2X communication, Machine-to-Machine (M2M) communication, a device in network side in a 6G network, a device that undertakes a function of the base station in a future communication system, etc. The base station may support networks with the same technology or different access technologies. The specific technology and the specific device form adopted by the network device are not limited in the embodiments of the present disclosure.

The base station may be fixed or mobile. For example, a helicopter or unmanned aerial vehicle may be configured to act as a mobile base station, and one or more cells may be moved according to the location of the mobile base station. In other examples, the helicopter or unmanned aerial vehicle may be configured to function as a device that communicates with another base station.

In some deployments, the network device in the embodiments of the present disclosure may be a CU or a DU, or the network device may include a CU and a DU. The gNB may also include an AAU.

The network device and the terminal device may be deployed on land, and include indoor or outdoor device, hand-held device, or vehicle-mounted device. The network device and the terminal device may also be deployed on the water. The network device and the terminal device may also be deployed in airplanes, in balloons and in satellites in the air. The scenario where the network device and the terminal device are located is not limited in the embodiments of the present disclosure.

It is also to be understood that all or part of the functions of the communication device in the present disclosure may also be implemented by software functions running on the hardware or by virtualized functions instantiated on a platform (e.g., a cloud platform).

PDCCH and determination of a PDCCH detection capability

In the mobile communication system, a PDCCH sent by a network device carries Downlink Control Information (DCI), and the DCI is used to indicate information, such as, time-frequency resources of a Physical Downlink Shared Channel (PDSCH) or a Physical Uplink Shared Channel (PUSCH). A resource granularity of the PDCCH may be a non-overlapped Control Channel Element (CCE). However, when the network device sends the PDCCH to the terminal device, the network device does not indicate the number the positions of CCEs occupied by the PDCCH and the sent DCI format to the terminal device. Therefore, the terminal device needs to detect the PDCCH candidate set in different search spaces to find specific time-frequency resource position of the PDCCH candidate set. This process is called as blind detection. In addition, the terminal device needs to perform blind channel estimation on the non-overlapped CCEs before performing the blind detection, to facilitate subsequent blind detection.

In order to ensure that the number of times of detections required for the PDCCH configured by the network device is within the capability range implemented by the terminal device, the PDCCH detection capability of the terminal device is agreed in the NR protocol, which is intended to restrict the PDCCH configuration of the network device. When the number of times of blind detections or blind channel estimations required for the PDCCH configured by the network device exceeds the PDCCH detection capability of the terminal device, the terminal device stops detecting the PDCCH on the remaining potential resources. For the multi-carrier system, it is required in the protocol that the PDCCH candidate resource(s) configured by the network device on the secondary cell (SCell) do not exceed the PDCCH detection capability of the terminal device; and the PDCCH candidate resource(s) configured on the primary cell (PCell) is able to exceed the PDCCH detection capability of the terminal device, but for a case of exceeding the PDCCH detection capability, the terminal device stops detecting the PDCCH on the remaining candidate resource(s).

For a single carrier system, the PDCCH detection capability may be agreed by $M_{\mathrm{PDCCH}}^{\max,\mathrm{slot},\mu}$ and $C_{\mathrm{PDCCH}}^{\max,\mathrm{slot},\mu}$. The specific values of $M_{\mathrm{PDCCH}}^{\max,\mathrm{slot},\mu}$ and $C_{\mathrm{PDCCH}}^{\max,\mathrm{slot},\mu}$ are shown in Table 1 and Table 2 below. In the related art, $M_{\mathrm{PDCCH}}^{\max,\mathrm{slot},\mu}$ and $M_{\mathrm{PDCCH}}^{\max,\mathrm{slot},\mu}$ may be pre-configured in the terminal device. $M_{\mathrm{PDCCH}}^{\max,\mathrm{slot},\mu}$ represents the maximum number of monitored PDCCH candidates per slot and per serving cell, the maximum number of times of blind detections by the terminal device on one carrier may not exceed $M_{\mathrm{PDCCH}}^{\max,\mathrm{slot},\mu}$. The value of $M_{\mathrm{PDCCH}}^{\max,\mathrm{slot},\mu}$ is associated with is determined based on the subcarrier spacing). For example, as shown in Table 1, when $\mu$ is 3, $M_{\mathrm{PDCCH}}^{\max,\mathrm{slot},\mu}$ is 20. When the number of times of the PDCCH blind detections exceeds $M_{\mathrm{PDCCH}}^{\max,\mathrm{slot},\mu}$ corresponding to the subcarrier spacing, the terminal device stops detecting the PDCCH on the remaining potential resources. The number of times of the PDCCH blind detections is associated with the number of pieces of DCI to be detected, the Aggregation Level (AL), and a size of PDCCH candidate set within each aggregation level. For example, the network device configures, for the terminal device, two kinds of DCI formats (i.e., the number of pieces of DCI to be detected is two) and two kinds of aggregation levels. If a size of a candidate position set corresponding to an aggregation level 1 among the two kinds of aggregation levels is 4, and a size of a candidate position set corresponding to an aggregation level 2 is 8, then the number of times of the blind detections required by the terminal device is: (4 +8) * 2 = 24.

Table 1 Table of the maximum number of monitored PDCCH candidates per slot and per serving cell

| $\mu$ | $M_{\mathrm{PDCCH}}^{max,slot,\mu}$ |
|---|---|
| 0 | 44 |
| 1 | 36 |
| 2 | 22 |
| 3 | 20 |

$C_{\mathrm{PDCCH}}^{\max,\mathrm{slot},\mu}$ represents the maximum number of non-overlapped CCEs per slot and per serving cell. The maximum number of times of blind channel estimations for non-overlapped CCEs by the terminal device on a single carrier may not exceed $C_{\mathrm{PDCCH}}^{\max,\mathrm{slot},\mu}$. The value of $C_{\mathrm{PDCCH}}^{\max,\mathrm{slot},\mu}$ is also associated with $\mu$. For example, as shown in Table 2, when $\mu$ is 3, $C_{\mathrm{PDCCH}}^{\max,\mathrm{slot},\mu}$ is 32. When the required number of times of blind channel estimations for non-overlapped CCEs exceeds $C_{\mathrm{PDCCH}}^{\max,\mathrm{slot},\mu}$ corresponding to the subcarrier spacing, the terminal device stops detecting the PDCCH on the remaining potential resources. The required number of times of blind channel estimations for non-overlapped CCEs is associated with the time-frequency range of the PDCCH potential distribution to be detected and pre-encoding granularity.

Table 2 Table of the maximum number of non-overlapped CCEs per slot and per serving cell

| $\mu$ | $C_{\mathrm{PDCCH}}^{max,slot,\mu}$ |
|---|---|
| 0 | 56 |
| 1 | 56 |
| 2 | 48 |
| 3 | 32 |

For the multi-carrier system, since the PDCCH detection capability cannot increase linearly with the increase of the number of carriers, the total PDCCH detection capability of the multi-carrier system is constrained through constraining the maximum number of carriers for the PDCCH detection. The maximum number of the carriers for the PDCCH detection is only used to calculate the total PDCCH detection capability, and does not limit the number of scheduled carriers. Specifically, for each scheduled carrier, the number of times of the PDCCH blind detections does not exceed

$min\left(M_{\text{PDCCH}}^{\text{max,slot},\mu}, M_{\text{PDCCH}}^{\text{total,slot},\mu}\right)$, and the number of times of blind channel estimations for non-overlapped CCEs does not exceed $min\left(C_{\text{PDCCH}}^{\text{max,slot},\mu}, C_{\text{PDCCH}}^{\text{total,slot},\mu}\right)$. Herein, $M_{\text{PDCCH}}^{\text{max,slot},\mu}$ and $C_{\text{PDCCH}}^{\text{max,slot},\mu}$ refer to the aforementioned Table 1 and Table 2. $M_{\text{PDCCH}}^{\text{total,slot},\mu}$ and $C_{\text{PDCCH}}^{\text{total,slot},\mu}$ are determined in the following manners.

$$M_{\text{PDCCH}}^{\text{total,slot},\mu} = \left\lfloor N_{\text{cells}}^{\text{cap}} \cdot M_{\text{PDCCH}}^{\text{max,slot},\mu} \cdot \left(N_{\text{cells}}^{\text{DL},\mu}\right) \Big/ \sum_{j=0}^{3} N_{\text{cells}}^{\text{DL},j} \right\rfloor$$

$$C_{\text{PDCCH}}^{\text{total,slot},\mu} = \left\lfloor N_{\text{cells}}^{\text{cap}} \cdot C_{\text{PDCCH}}^{\text{max,slot},\mu} \cdot \left(N_{\text{cells}}^{\text{DL},\mu}\right) \Big/ \sum_{j=0}^{3} N_{\text{cells}}^{\text{DL},j} \right\rfloor$$

Herein, $N_{\text{cells}}^{\text{cap}}$ represents the maximum number of carriers for PDCCH detection reported by the terminal, $N_{\text{cells}}^{\text{DL},\mu}$ represents the number of carriers corresponding to the target subcarrier spacing (determined based on $\mu$), and $\sum_{j=0}^{3} N_{\text{cells}}^{\text{DL},j}$ represents the total carrier number of multiple carriers, then $\left(N_{\text{cells}}^{\text{DL},\mu}\right)/\sum_{j=0}^{3} N_{\text{cells}}^{\text{DL},j}$ represents a proportion of the number of carriers corresponding to the target subcarrier spacing to the total carrier number.

According to the aforementioned description, in the multi-carrier system, the PDCCH detection capability of the terminal device for each scheduled carrier is determined through the aforementioned formula. However, the same determination method may not be fully applicable to different carriers in the multi-carrier system. Different carriers in the multi-carrier system may have different scheduling requirements, which may cause that different carriers have different requirements for PDCCH detection. A carrier with a large bandwidth may have larger scheduling requirement, and the network device may configure more numbers of corresponding PDCCHs for the carrier, so that more numbers of times of PDCCH detections may be required. For example, the bandwidth of a virtual carrier (or a logical carrier) aggregated by multiple physical carriers is several times that of a physical carrier, and the scheduling requirement of the virtual carrier increase accordingly. However, the aforementioned determination method for PDCCH detection capability does not take into account the difference between different carriers, the PDCCH detection capability determined for the carrier having the large scheduling requirement may be insufficient, and the PDCCH detection capability determined for the carrier having the small scheduling requirement may be excessive, thereby affecting the transmission efficiency of the PDCCH.

Based on the aforementioned problem, embodiments of the present disclosure are described in detail below.

As shown in FIG. 2, the embodiments of the present disclosure provide a method for channel detection. The method includes operation 210. In operation 210, a terminal device determines a PDCCH detection capability corresponding to a first carrier among multiple carriers according to one or more of: a first parameter, a second parameter, and a third parameter.

In some implementations, the first carrier may be any one carrier that is scheduled among the multiple carriers.

In some implementations, the first carrier may be a physical carrier, for example, a carrier that is allocated to the operator and can be accessed independently by the operator.

In other implementations, the first carrier may be a virtual carrier, for example, a carrier consisting of one or more physical carriers.

In some implementations, the PDCCH detection capability corresponding to the first carrier may refer to the maximum number of candidate PDCCHs obtained through the terminal device performing the blind detection and/or the maximum number of non-overlapped CCEs obtained through the terminal device performing the blind channel estimation.

In other implementations, the PDCCH detection capability corresponding to the first carrier may refer to the maximum number of times of blind detections for PDCCHs and/or the maximum number of times of blind channel estimations for non-overlapped CCEs.

In some implementations, the first parameter represents a size of a bandwidth of the first carrier. The PDCCH detection capability corresponding to the first carrier among the multiple carriers is determined based on the first parameter, which is helpful to adapt to the scheduling requirement of the first carrier.

In some implementations, the second parameter represents an allocation coefficient of the PDCCH detection capability corresponding to the first carrier.

In some implementations, the second parameter may be determined based on configuration information of the network device. In some implementations, the configuration information of the network device may indicate a value of the allocation coefficient of the PDCCH detection capability corresponding to the first carrier. Furthermore, the configuration information of the network device may be carried in a Radio Resource Control (RRC) message, DCI, a Medium Access Control (MAC) Control Element (CE), or the like.

In some implementations, the network device may configure the second parameter based on the scheduling requirement of the network device that may be determined based on one or more factors, such as, the bandwidth of the first carrier, network coverage, interference coordination, etc.

In the embodiments of the present disclosure, the PDCCH detection capability corresponding to the first carrier among the multiple carriers is determined based on the second parameter, which is helpful to match the requirement of the network device.

In some implementations, the third parameter represents a total PDCCH detection capability corresponding to target carrier(s) among the multiple carriers. Since the target carrier has the same carrier attribute as the first carrier, the third parameter may represent the sum of PDCCH detection capabilities corresponding to the carriers having the same carrier attribute as the first carrier among the multiple carriers. Herein, the sum of the PDCCH detection capabilities may refer to the sum of maximum numbers of times of blind detections for PDCCHs and/or the sum of maximum numbers of times of blind channel estimations for non-overlapped CCEs. The carrier attribute herein may include one or more of the following: a subcarrier spacing; a type of the PDCCH detection. The type of the PDCCH detection includes: detection in units of slots, or detection in units of spans.

In some implementations, the third parameter may be determined based on one or more of: a fourth parameter; a fifth parameter; a sixth parameter; an eighth parameter; and a ninth parameter.

In some implementations, the fourth parameter is used to indicate the maximum number of carriers for PDCCH detection by the terminal device, the fourth parameter may be determined by the terminal device, and an upper limitation of the PDCCH detection capability of the terminal device may be determined based on the fourth parameter.

In some implementations, the fifth parameter is used to indicate the maximum number of times of PDCCH detections performed by the terminal device on a single carrier, and the fifth parameter may be determined according to communication protocol(s). For example, as shown in Table 3, a value of the fifth parameter may be determined according to the maximum number of PDCCH candidates per slot and per serving cell specified in the communication protocol. For example, when $\mu$ is 0, the maximum number of PDCCH candidates per slot and per serving cell is 44, the maximum number of times of PDCCH detections performed by the terminal device on the single carrier is 44. For the multiple carriers, the sum of numbers of times of PDCCH blind detections performed by the terminal device on the multiple carriers may be further determined based on the fifth parameter.

Table 3 Table of the maximum number of PDCCH candidates per slot and per serving cell

| $\mu$ | $M_{\text{PDCCH}}^{single,slot,\mu}$ |
|---|---|
| 0 | 44 |
| 1 | 36 |
| 2 | 22 |
| 3 | 20 |

In some implementations, the sixth parameter is used to indicate the maximum number of non-overlapped CCEs for channel estimation on a single carrier, and the sixth parameter may also be determined according to communication protocol(s). For example, as shown in Table 4, the value of the sixth parameter may be determined according to the maximum number of non-overlapped CCEs per slot and per serving cell specified in the communication protocol. For example, when $\mu$ is 0, the maximum number of non-overlapped CCEs per slot and per serving cell is 56, the maximum number of non-overlapped CCEs for channel estimation on the single carrier is 56. For the multiple carriers, the sum of numbers of times of blind channel estimations for non-overlapped CCEs performed by the terminal device on the multiple carriers may be further determined based on the sixth parameter.

Table 4 Table of the maximum number of non-overlapped CCEs per slot and per serving cell

| $\mu$ | $C_{\text{PDCCH}}^{single,slot,\mu}$ |
|---|---|
| 0 | 56 |
| 1 | 56 |
| 2 | 48 |
| 3 | 32 |

In some implementations, the eighth parameter is used to indicate the number of the multiple carriers. The number of the multiple carriers may be determined according to the number of semi-static configured carriers (including active carriers and inactive carriers), or determined according to the number of active carriers.

In some implementations, the ninth parameter is used to indicate the number of target carriers among the multiple carriers. For example, the number of target carriers having the same subcarrier spacing as the first carrier. For another example, the number of target carriers having the same type of the PDCCH detection as the first carrier.

In some implementations, the third parameter may be determined based on the fourth parameter, the fifth parameter, the eighth parameter and the ninth parameter. Furthermore, the third parameter may be determined based on the fourth parameter, the fifth parameter and the tenth parameter. The tenth parameter may be determined based on a quotient of the ninth parameter and the eighth parameter. That is to say, the third parameter is determined based on the following formula: $\lfloor N \cdot M \cdot k/n \rfloor$. Herein, N represents the fourth parameter, M represents the fifth parameter, and n represents the eighth parameter, k represents the ninth parameter, $\frac{k}{n}$ represents the tenth parameter, and $\lfloor \cdot \rfloor$ represents downward rounding. As an example, the target carriers are carriers having the same subcarrier spacing. $M_{\text{PDCCH}}^{total,slot,\mu}$ represents the third parameter, then, $\lfloor N \cdot M \cdot k/n \rfloor$ may also be expressed as the following formula (1).

$$M_{\text{PDCCH}}^{total,slot,\mu} = \left\lfloor N_{\text{cells}}^{\text{cap}} \cdot M_{\text{PDCCH}}^{single,slot,\mu} \cdot \left(N_{\text{cells}}^{\text{DL},\mu}\right) \middle/ \sum_{j=0}^{3} N_{\text{cells}}^{\text{DL},j} \right\rfloor \quad (1)$$

Herein, $N_{\text{cells}}^{\text{cap}}$ represents the fourth parameter, and has the meaning of the maximum number of carriers on which the terminal device is able to perform the PDCCH detection. $M_{\text{PDCCH}}^{single,slot,\mu}$ represents the fifth parameter, and has the meaning of the maximum number of times of PDCCH detections performed by the terminal device on a single carrier. $N_{\text{cells}}^{\text{DL},\mu}$ represents the ninth parameter and has the meaning of the number of target carriers among the multiple carriers (the target carriers correspond to the same $\sum_{j=0}^{3} N_{\text{cells}}^{\text{DL},j}$ represents the eighth parameter and has the meaning of the number of the multiple carriers. $\left(N_{\text{cells}}^{\text{DL},\mu}\right) / \sum_{j=0}^{3} N_{\text{cells}}^{\text{DL},j}$ represents the tenth parameter and has the meaning of a proportion of the number of target carriers to the number of the multiple carriers. Therefore, the third parameter determined based on the fourth parameter, the fifth parameter, the eighth parameter and the ninth parameter may represent the sum of the maximum number of times of blind detections for PDCCHs corresponding to the target carriers among the multiple carriers.

In other implementations, the third parameter may be determined based on the fourth parameter, the sixth parameter, the eighth parameter and the ninth parameter. Furthermore, the third parameter may be determined based on the fourth parameter, the sixth parameter and the tenth parameter. The tenth parameter may be determined based on a quotient of the ninth parameter and the eighth parameter. That is to say, the third parameter is determined based on the following formula: $\lfloor N \cdot C \cdot k/n \rfloor$. Herein, N represents the fourth parameter, C represents the sixth parameter, and n represents the eighth parameter, k represents the ninth parameter, $\dfrac{k}{n}$ represents the tenth parameter, and $\lfloor \cdot \rfloor$ represents downward rounding.

As an example, the target carriers are carriers having the same subcarrier spacing. $C_{\text{PDCCH}}^{\text{total,slot},\mu}$ represents the third parameter, then, $\lfloor N \cdot C \cdot k/n \rfloor$ may also be expressed as the following formula (2).

$$C_{\text{PDCCH}}^{\text{total,slot},\mu} = \left\lfloor N_{\text{cells}}^{\text{cap}} \cdot C_{\text{PDCCH}}^{\text{single,slot},\mu} \cdot \left( N_{\text{cells}}^{\text{DL},\mu} \right) \Big/ \sum_{j=0}^{3} N_{\text{cells}}^{\text{DL},j} \right\rfloor \quad (2)$$

Herein, $N_{\text{cells}}^{\text{cap}}$ represents the fourth parameter, and has the meaning of the maximum number of carriers on which the terminal device is able to perform the PDCCH detection. $C_{\text{PDCCH}}^{\text{single,slot},\mu}$ represents the sixth parameter and has the meaning of the maximum number of non-overlapped CCEs for channel estimation on a single carrier. $N_{\text{cells}}^{\text{DL},\mu}$ represents the ninth parameter and has the meaning of the number of target carriers among the multiple carriers (the target carriers correspond to the same $\mu$). $\sum_{j=0}^{3} N_{\text{cells}}^{\text{DL},j}$ represents the eighth parameter and has the meaning of the number of the multiple carriers. $\left( N_{\text{cells}}^{\text{DL},\mu} \right) \Big/ \sum_{j=0}^{3} N_{\text{cells}}^{\text{DL},j}$ represents the tenth parameter and has the meaning of a proportion of the number of target carriers to the number of the multiple carriers. Therefore, the third parameter determined based on the fourth parameter, the sixth parameter, the eighth parameter and the ninth parameter may represent the sum of the maximum numbers of times the blind channel estimations for non-overlapped CCEs corresponding to the target carriers among the multiple carriers.

In the embodiments of the present disclosure, the PDCCH detection capability corresponding to the first carrier among the multiple carriers is determined based on the third parameter, which is helpful to avoid that the PDCCH detection capability corresponding to the first carrier exceeds the total PDCCH detection capability of the terminal device.

To sum up, in the embodiments of the present disclosure, the PDCCH detection capability corresponding to the single carrier may be determined according to factors of the bandwidth size of the single carrier among the multiple carriers, the allocation coefficient of the PDCCH detection capability corresponding to the single carrier among the multiple carriers, and the total PDCCH detection capability corresponding to the target carriers among the multiple carriers, which is helpful to more reasonably allocate the PDCCH detection capability corresponding to each of the multiple carriers.

In some implementations, the PDCCH detection capability corresponding to the first carrier may be further determined based on one or more of: a fourth parameter, a fifth parameter, a sixth parameter, a seventh parameter, an eighth parameter, a ninth parameter and an eleventh parameter. That is to say, the PDCCH detection capability corresponding to the first carrier may be determined based on one or more of: the first parameter, the second parameter, the third parameter, the fourth parameter, the fifth parameter, the sixth parameter, the seventh parameter, the eighth parameter, the ninth parameter and the eleventh parameter. In addition to the first parameter, the second parameter and the third parameter, introducing more parameters helps to more reasonably determine the PDCCH detection capability corresponding to the first carrier.

In some implementations, the seventh parameter is used to indicate the total bandwidth of the multiple carriers. A bandwidth proportion of the first carrier may be further determined based on the seventh parameter, thereby reflecting the scheduling requirement of the first carrier.

In some implementations, the eleventh parameter is used to indicate a total bandwidth of the target carriers. The target carriers may refer to carriers having the same carrier attribute among the multiple carriers, for example, the carriers having the same subcarrier spacing. The bandwidth proportion of the first carrier to the target carriers may be further determined based on the eleventh parameter, thereby reflecting the scheduling requirement of the first carrier in the target carriers.

Hereinafter, how the PDCCH detection capability corresponding to the first carrier is determined based on the aforementioned one or more parameters in the embodiment of the present disclosure is described in detail.

**First embodiment**

In some implementations, the terminal device may determine the PDCCH detection capability corresponding to the first carrier among multiple carriers according to the first parameter.

In some implementations, the PDCCH detection capability corresponding to the first carrier may be determined based on the first parameter, the fourth parameter, the fifth parameter and the seventh parameter.

Furthermore, the PDCCH detection capability corresponding to the first carrier may be determined based on a twelfth parameter. The twelfth parameter may be determined based on a product of the fourth parameter, the fifth parameter and the thirteenth parameter. The thirteenth parameter is determined based on a quotient of the first parameter and the seventh parameter. That is to say, the twelfth parameter is determined based on the following formula:

$\left\lfloor N \cdot M \cdot B_j / \sum_{i=0}^{n-1} B_i \right\rfloor$ . Herein, N represents the fourth parameter, M represents the fifth parameter, $\sum_{i=0}^{n-1} B_i$

represents the seventh parameter, $B_j$ represents the first parameter, $B_j / \sum_{i=0}^{n-1} B_i$ represents the thirteenth parameter, both i and j are positive integers greater than or equal to 0 and less than n, n represents the eighth parameter, $\Sigma$ represents summation, and $\lfloor \cdot \rfloor$ represents rounding down.

As an example, the j-th carrier among the multiple carriers is used as the first carrier, and $M_{\text{PDCCH}}^{max,\text{slot},\mu}$

represents the twelfth parameter, $\left\lfloor N \cdot M \cdot B_j / \sum_{i=0}^{n-1} B_i \right\rfloor$ may also be expressed as the following formula (3).

$$M_{\text{PDCCH}}^{max,\text{slot},\mu} = \left\lfloor N_{\text{cells}}^{\text{cap}} \cdot M_{\text{PDCCH}}^{single,\text{slot},\mu} \cdot B_j / \sum_{i=0}^{k-1} B_i \right\rfloor \quad (3)$$

Herein, $N_{\text{cells}}^{\text{cap}}$ represents the fourth parameter, and has the meaning of the maximum number of carriers on which the terminal device is able to perform the PDCCH detection. $M_{\text{PDCCH}}^{single,\text{slot},\mu}$ represents the fifth parameter and has the meaning of the maximum number of times of PDCCH detections performed by the terminal device on a single carrier. $B_j$ represents the first parameter and has the meaning of a bandwidth of the j-th carrier, i.e., the bandwidth of the first carrier. $B_i$ represents a bandwidth of the i-th carrier, i.e., a bandwidth of any one carrier among the multiple carriers.

$\sum_{i=0}^{k-1} B_i$ represents the seventh parameter and has the meaning of the total bandwidth of the multiple carriers.

$B_j / \sum_{i=0}^{k-1} B_i$ represents the thirteenth parameter and has the meaning of the proportion of the bandwidth of the first carrier among the multiple carriers to the total bandwidth of the multiple carriers. The PDCCH detection capability of the first carrier determined based on the aforementioned formula may represent the maximum number of times of the blind detections for PDCCHs on the first carrier. The maximum number of times of the blind detections for PDCCHs on the first carrier is proportional to the bandwidth proportion occupied by the first carrier to the multiple carriers, and adapts to the scheduling requirement of the first carrier, which is helpful to make full use of the PDCCH detection capability of the terminal device.

In other implementations, the PDCCH detection capability corresponding to the first carrier may be determined based on the first parameter, the fourth parameter, the sixth parameter and the seventh parameter.

Furthermore, the PDCCH detection capability corresponding to the first carrier may be determined based on a twelfth parameter. The twelfth parameter may be determined based on a product of the fourth parameter, the sixth parameter and the thirteenth parameter. The thirteenth parameter is determined based on a quotient of the first parameter and the seventh parameter. That is to say, the twelfth parameter is determined based on the following formula:

$\left\lfloor N \cdot C \cdot B_j / \sum_{i=0}^{n-1} B_i \right\rfloor$ . Herein, N represents the fourth parameter, C represents the sixth parameter, $\sum_{i=0}^{n-1} B_i$

represents the seventh parameter, $B_j$ represents the first parameter, $B_j / \sum_{i=0}^{n-1} B_i$ represents the thirteenth parameter, both i and j are positive integers greater than or equal to 0 and less than n, n represents the eighth parameter, $\Sigma$ represents summation, and $\lfloor \cdot \rfloor$ represents rounding down.

As an example, the j-th carrier among the multiple carriers is used as the first carrier, and $C_{\text{PDCCH}}^{\text{max,slot},\mu}$ represents the twelfth parameter, $\left\lfloor N \cdot C \cdot B_j / \sum_{i=0}^{n-1} B_i \right\rfloor$ may also be expressed as the following formula (4).

$$C_{\text{PDCCH}}^{\text{max,slot},\mu} = \left\lfloor N_{\text{cells}}^{\text{cap}} \cdot C_{\text{PDCCH}}^{\text{single,slot},\mu} \cdot B_j \middle/ \sum_{i=0}^{k-1} B_i \right\rfloor \quad (4)$$

Herein, $N_{\text{cells}}^{\text{cap}}$ represents the fourth parameter, and has the meaning of the maximum number of carriers on which the terminal device is able to perform the PDCCH detection. $C_{\text{PDCCH}}^{\text{single,slot},\mu}$ represents the fifth parameter and has the meaning of the maximum number of non-overlapped CCEs for channel estimation on a single carrier. $B_j$ represents the first parameter and has the meaning of a bandwidth of the j-th carrier, i.e., the bandwidth of the first carrier. $B_i$ represents a bandwidth of the i-th carrier, i.e., a bandwidth of any one carrier among the multiple carriers. $\sum_{i=0}^{k-1} B_i$ represents the seventh parameter and has the meaning of the total bandwidth of the multiple carriers. $B_j / \sum_{i=0}^{k-1} B_i$ represents the thirteenth parameter and has the meaning of the proportion of the bandwidth of the first carrier among the multiple carriers to the total bandwidth of the multiple carriers. The PDCCH detection capability of the first carrier determined based on the aforementioned formula may represent the maximum number of times of blind channel estimations for non-overlapped CCEs on the first carrier. The maximum number of times of blind channel estimations for non-overlapped CCEs on the first carrier is proportional to the bandwidth proportion occupied by the first carrier to the multiple carriers, and adapts to the scheduling requirement of the first carrier, which is helpful to make full use of the PDCCH detection capability of the terminal device.

In some implementations, the PDCCH detection capability corresponding to the first carrier is limited by the twelfth parameter. For example, the maximum number of times of the blind detections for PDCCHs corresponding to the first carrier does not exceed $M_{\text{PDCCH}}^{max,\text{slot},\mu}$ shown in formula (3), and the maximum number of times of blind channel estimations for non-overlapped CCEs corresponding to the first carrier does not exceed $C_{\text{PDCCH}}^{\text{max,slot},\mu}$ shown in formula (4).

In the first embodiment, the PDCCH detection capability of the first carrier is proportional to the bandwidth proportion occupied by the first carrier to the multiple carriers, and adapts to the scheduling requirement of the first carrier, which is helpful to make full use of the PDCCH detection capability of the terminal device.

**Second embodiment**

In some implementations, the terminal device may determine the PDCCH detection capability corresponding to the first carrier among multiple carriers according to the second parameter.

In some implementations, the PDCCH detection capability corresponding to the first carrier may be determined based on the second parameter, the fourth parameter and the fifth parameter.

Furthermore, the PDCCH detection capability corresponding to the first carrier may be determined based on a twelfth parameter. The twelfth parameter may be determined based on a product of the fourth parameter, the fifth parameter and the second parameter. That is to say, the twelfth parameter is determined based on the following formula:

$\left\lfloor N \cdot M \cdot \beta_j \right\rfloor$ . Herein, N represents the fourth parameter, M represents the fifth parameter, $\beta_j$ represents the second parameter, j is a positive integer greater than or equal to 0 and less than n, n represents the eighth parameter, and $\lfloor \cdot \rfloor$ represents rounding down.

As an example, the j-th carrier among the multiple carriers is used as the first carrier, and $M_{\text{PDCCH}}^{max,\text{slot},\mu}$ represents the twelfth parameter, $\left\lfloor N \cdot M \cdot \beta_j \right\rfloor$ may also be expressed as the following formula (5).

$$M_{\text{PDCCH}}^{max,\text{slot},\mu} = \left\lfloor N_{\text{cells}}^{\text{cap}} \cdot M_{\text{PDCCH}}^{single,\text{slot},\mu} \cdot \beta_j \right\rfloor \quad (5)$$

Herein, $N_{\text{cells}}^{\text{cap}}$ represents the fourth parameter, and has the meaning of the maximum number of carriers on which the terminal device is able to perform the PDCCH detection. $M_{\text{PDCCH}}^{single,\text{slot},\mu}$ represents the fifth parameter and has the meaning of the maximum number of times of PDCCH detections performed by the terminal device on a single carrier. $\beta_j$ represents the second parameter and has the meaning of an allocation coefficient of the PDCCH detection capability corresponding to the j-th carrier among the multiple carriers, i.e., an allocation coefficient of the PDCCH detection capability corresponding to the first carrier. The PDCCH detection capability of the first carrier determined based on the aforementioned formula may represent the maximum number of times of the blind detections for PDCCHs on the first carrier. The maximum number of times of the blind detections for PDCCHs on the first carrier is proportional to the allocation coefficient of the PDCCH detection capability corresponding to the first carrier, and the allocation coefficient is determined by the network device, which is helpful to match the scheduling requirement of the network device.

In other implementations, the PDCCH detection capability corresponding to the first carrier may be determined based on the second parameter, the fourth parameter and the sixth parameter.

Furthermore, the PDCCH detection capability corresponding to the first carrier may be determined based on a twelfth parameter. The twelfth parameter may be determined based on a product of the fourth parameter, the sixth parameter and the second parameter. That is to say, the twelfth parameter is determined based on the following formula:

$\left\lfloor N \cdot C \cdot \beta_j \right\rfloor$. Herein, N represents the fourth parameter, C represents the sixth parameter, $\beta_j$ represents the second parameter, j is a positive integer greater than or equal to 0 and less than n, n represents the eighth parameter, and $\lfloor \cdot \rfloor$ represents rounding down.

As an example, the j-th carrier among the multiple carriers is used as the first carrier, and $C_{\text{PDCCH}}^{max,\text{slot},\mu}$ represents the twelfth parameter, $\left\lfloor N \cdot C \cdot \beta_j \right\rfloor$ may also be expressed as the following formula (6).

$$C_{\text{PDCCH}}^{max,\text{slot},\mu} = \left\lfloor N_{\text{cells}}^{\text{cap}} \cdot C_{\text{PDCCH}}^{single,\text{slot},\mu} \cdot \beta_j \right\rfloor \quad (6)$$

Herein, $N_{\text{cells}}^{\text{cap}}$ represents the fourth parameter, and has the meaning of the maximum number of carriers on which the terminal device is able to perform the PDCCH detection. $C_{\text{PDCCH}}^{max,\text{slot},\mu}$ represents the fifth parameter and has the meaning of the maximum number of non-overlapped CCEs for channel estimation on a single carrier. $\beta_j$ represents the second parameter and has the meaning of an allocation coefficient of the PDCCH detection capability corresponding to the j-th carrier among the multiple carriers, i.e., an allocation coefficient of the PDCCH detection capability corresponding to the first carrier. The PDCCH detection capability of the first carrier determined based on the aforementioned formula may represent the maximum number of times of blind channel estimations for non-overlapped CCEs on the first carrier. The maximum number of times of blind channel estimations for non-overlapped CCEs on the first carrier is proportional to the allocation coefficient of the PDCCH detection capability corresponding to the first carrier, and the allocation coefficient is determined by the network device, which is helpful to match the scheduling requirement of the network device.

In some implementations, the PDCCH detection capability corresponding to the first carrier is limited by the twelfth parameter. For example, the maximum number of times of the blind detections for PDCCHs corresponding to the first carrier does not exceed $M_{\text{PDCCH}}^{max,\text{slot},\mu}$ shown in formula (5), and the maximum number of times of blind channel estimations for non-overlapped CCEs corresponding to the first carrier does not exceed $C_{\text{PDCCH}}^{max,\text{slot},\mu}$ shown in formula (6).

In the second embodiment, the PDCCH detection capability of the first carrier is proportional to the allocation coefficient of the PDCCH detection capability corresponding to the first carrier, which is helpful to match the scheduling requirement of the network device.

**Third embodiment**

In some implementations, the PDCCH detection capability corresponding to the first carrier may be determined based on the third parameter and the twelfth parameter. In this case, the maximum number of times of blind detections for PDCCHs corresponding to the first carrier may be determined based on the third parameter $M_{\text{PDCCH}}^{\text{total,slot},\mu}$ and the twelfth parameter $M_{\text{PDCCH}}^{max,\text{slot},\mu}$, and the maximum number of times of blind channel estimations for non-overlapped CCEs corresponding to the first carrier may be determined based on the third parameter $C_{\text{PDCCH}}^{\text{total,slot},\mu}$ and the twelfth parameter $C_{\text{PDCCH}}^{\max,\text{slot},\mu}$.

In some implementations, the PDCCH detection capability corresponding to the first carrier may be determined based on a minimum of the third parameter and the twelfth parameter. For example, the maximum number of times of the blind detections for PDCCHs corresponding to the first carrier does not exceed min ( $M_{\text{PDCCH}}^{\text{total,slot},\mu}$, $M_{\text{PDCCH}}^{max,\text{slot},\mu}$ ), and the maximum number of times of blind channel estimations for non-overlapped CCEs corresponding to the first carrier does not exceed min ( $C_{\text{PDCCH}}^{\text{total,slot},\mu}$, $C_{\text{PDCCH}}^{\max,\text{slot},\mu}$ ).

In some implementations, the twelfth parameter may be determined by the formula shown in the first embodiment. For example, $M_{\text{PDCCH}}^{max,\text{slot},\mu}$ may be determined through formula (3), and $C_{\text{PDCCH}}^{\max,\text{slot},\mu}$ may be determined through formula (4).

In some implementations, the twelfth parameter may be determined by the formula shown in the second embodiment. For example, $M_{\text{PDCCH}}^{max,\text{slot},\mu}$ may be determined through formula (5) $C_{\text{PDCCH}}^{\max,\text{slot},\mu}$ may be determined through formula (6).

In the third embodiment, the PDCCH detection capability corresponding to the first carrier is limited by both the bandwidth proportion of the first carrier or the allocation coefficient of the PDCCH detection capability, and the total PDCCH detection capability corresponding to the target carriers having the same carrier attribute as the first carrier, which is helpful to make full use of the PDCCH detection capability of the terminal device and increases the flexibility of resource allocation.

**Fourth embodiment**

In some implementations, the terminal device may determine the PDCCH detection capability corresponding to the first carrier among multiple carriers according to the first parameter and the third parameter.

In some implementations, the PDCCH detection capability corresponding to the first carrier may be determined based on the first parameter, the third parameter and the eleventh parameter. The third parameter may be determined based on the fourth parameter, the fifth parameter, the eighth parameter and the ninth parameter.

Furthermore, the PDCCH detection capability corresponding to the first carrier may be determined based on a twelfth parameter. The twelfth parameter may be determined based on the fourth parameter, the fifth parameter, the tenth parameter and the fourteenth parameter. The tenth parameter is determined based on a quotient of the ninth parameter and the eighth parameter, and the fourteenth parameter is determined based on a quotient of the first parameter and the eleventh parameter. That is to say, the twelfth parameter is determined based on the following formula:

$$\left\lfloor N \cdot M \cdot \frac{k}{n} \cdot B_j^u \Big/ \sum_{i=0}^{k-1} B_i^u \right\rfloor.$$ Herein, N represents the fourth parameter, M represents the fifth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u \Big/ \sum_{i=0}^{k-1} B_i^u$ represents the fourteenth parameter, both i and j are positive integers greater than or equal to 0 and less than k, u represents the carrier attribute, $\Sigma$ represents summation, and $\lfloor \cdot \rfloor$ represents rounding down.

As an example, the j-th carrier among the multiple carriers is used as the first carrier, and the target carriers are the carriers having the same subcarrier spacing. As an example, $M_{\text{PDCCH}}^{\text{total,slot},\mu}$ represents the twelfth parameter, $\left\lceil N \cdot M \cdot \frac{k}{n} \cdot B_j^u \Big/ \sum_{i=0}^{k-1} B_i^u \right\rceil$ may also be expressed as the following formula (7).

$$M_{\text{PDCCH}}^{\text{total,slot},\mu} = \left\lceil N_{\text{cells}}^{\text{cap}} \cdot M_{\text{PDCCH}}^{single,\text{slot},\mu} \cdot \left(N_{\text{cells}}^{\text{DL},\mu}\right) \Big/ \sum_{j=0}^{3} N_{\text{cells}}^{\text{DL},j} \cdot B_j^u \Big/ \sum_{i=0}^{k-1} B_i^u \right\rceil \quad (7)$$

Herein, $N_{\text{cells}}^{\text{cap}}$ represents the fourth parameter, and has the meaning of the maximum number of carriers on which the terminal device is able to perform the PDCCH detection. $M_{\text{PDCCH}}^{single,\text{slot},\mu}$ represents the fifth parameter and has the meaning of the maximum number of times of PDCCH detections performed by the terminal device on a single carrier. $N_{\text{cells}}^{\text{DL},\mu}$ represents the ninth parameter and has the meaning of the number of target carriers among the multiple carriers (the target carriers correspond to the same μ). $\sum_{j=0}^{3} N_{\text{cells}}^{\text{DL},j}$ represents the eighth parameter and has the meaning of the number of the multiple carriers. $\left(N_{\text{cells}}^{\text{DL},\mu}\right) \big/ \sum_{j=0}^{3} N_{\text{cells}}^{\text{DL},j}$ represents the tenth parameter and has the meaning of a proportion of the number of target carriers to the number of the multiple carriers. $B_j^u$ represents the first parameter and has the meaning of a bandwidth of the j-th carrier among the multiple carriers, i.e., the bandwidth of the first carrier. $B_i^u$ represents a bandwidth of the i-th target carrier among the multiple carriers. $\sum_{i=0}^{k-1} B_i^u$ represents the eleventh parameter and has the meaning of the total bandwidth of the target carriers among the multiple carriers. $B_j^u \big/ \sum_{i=0}^{k-1} B_i^u$ represents the fourteenth parameter and has the meaning of the proportion of the bandwidth of the first carrier among multiple carriers to the total bandwidth of the target carriers. The PDCCH detection capability of the first carrier determined based on the aforementioned formula may represent the maximum number of times of the blind detections for PDCCHs on the first carrier. In the sum of the numbers of times of PDCCH detections corresponding to the target carriers, the maximum number of times of the blind detections for PDCCHs on the first carrier is proportional to the bandwidth proportion of the first carrier. Therefore, the determination of the maximum number of times of the blind detections for PDCCHs on the first carrier based on this formula can not only increase the flexibility of the resource allocation, but also adapting to the scheduling requirement of the first carrier, thereby helping to make full use of the PDCCH detection capability of the terminal device.

In other implementations, the PDCCH detection capability corresponding to the first carrier may be determined based on the first parameter, the third parameter and the eleventh parameter. The third parameter may be determined based on the fourth parameter, the sixth parameter, the eighth parameter, and the ninth parameter.

Furthermore, the PDCCH detection capability corresponding to the first carrier may be determined based on a twelfth parameter. The twelfth parameter may be determined based on the fourth parameter, the sixth parameter, the tenth parameter and the fourteenth parameter. The tenth parameter is determined based on a quotient of the ninth parameter and the eighth parameter, and the fourteenth parameter is determined based on a quotient of the first parameter and the eleventh parameter. That is to say, the twelfth parameter is determined based on the following formula:

$\left\lceil N \cdot C \cdot \frac{k}{n} \cdot B_j^u \Big/ \sum_{i=0}^{k-1} B_i^u \right\rceil$. Herein, N represents the fourth parameter, C represents the sixth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u \big/ \sum_{i=0}^{k-1} B_i^u$ represents the fourteenth parameter, both i and j are positive integers greater than or equal to 0 and less than k, u represents the carrier attribute, Σ represents

summation, and $\lfloor \cdot \rfloor$ represents rounding down.

As an example, the j-th carrier among the multiple carriers is used as the first carrier, and the target carriers are the carriers having the same subcarrier spacing. $C_{\text{PDCCH}}^{\text{total,slot},\mu}$ represents the twelfth parameter, $\left\lfloor N \cdot C \cdot \frac{k}{n} \cdot B_j^u / \sum_{i=0}^{k-1} B_i^u \right\rfloor$ may also be expressed as the following formula (8).

$$C_{\text{PDCCH}}^{\text{max,slot},\mu} = \left\lfloor N_{\text{cells}}^{\text{cap}} \cdot C_{\text{PDCCH}}^{single,\text{slot},\mu} \cdot \left(N_{\text{cells}}^{\text{DL},\mu}\right) / \sum_{j=0}^{3} N_{\text{cells}}^{\text{DL},j} \cdot B_j^u / \sum_{i=0}^{k-1} B_i^u \right\rfloor \quad (8)$$

Herein, $N_{\text{cells}}^{\text{cap}}$ represents the fourth parameter, and has the meaning of the maximum number of carriers on which the terminal device is able to perform the PDCCH detection. $C_{\text{PDCCH}}^{single,\text{slot},\mu}$ represents the fifth parameter and has the meaning of the maximum number of non-overlapped CCEs for channel estimation on a single carrier. $N_{\text{cells}}^{\text{DL},\mu}$ represents the ninth parameter and has the meaning of the number of target carriers among the multiple carriers (the target carriers correspond to the same $\mu$). $\sum_{j=0}^{3} N_{\text{cells}}^{\text{DL},j}$ represents the eighth parameter and has the meaning of the number of the multiple carriers. $\left(N_{\text{cells}}^{\text{DL},\mu}\right) / \sum_{j=0}^{3} N_{\text{cells}}^{\text{DL},j}$ represents the tenth parameter and has the meaning of a proportion of the number of target carriers to the number of the multiple carriers. $B_j^u$ represents the first parameter and has the meaning of the bandwidth of the j-th carrier among the multiple carriers, i.e., the bandwidth of the first carrier. $B_i^u$ represents the bandwidth of the i-th target carrier among the multiple carriers. $\sum_{i=0}^{k-1} B_i^u$ represents the eleventh parameter and has the meaning of the total bandwidth of the target carriers among the multiple carriers. $B_j^u / \sum_{i=0}^{k-1} B_i^u$ represents the fourteenth parameter and has the meaning of the proportion of the bandwidth of the first carrier among multiple carriers to the total bandwidth of the target carriers. The PDCCH detection capability of the first carrier determined based on the aforementioned formula may represent the maximum number of times of blind channel estimations for non-overlapped CCEs on the first carrier. In the sum of the numbers of times of blind channel estimations for non-overlapped CCEs corresponding to the target carriers, the maximum number of times of blind channel estimations for non-overlapped CCEs on the first carrier is proportional to the bandwidth proportion of the first carrier. Therefore, the determination of the maximum number of times of blind channel estimations for non-overlapped CCEs on the first carrier based on this formula can not only increase the flexibility of the resource allocation, but also adapting to the scheduling requirement of the first carrier, thereby helping to make full use of the PDCCH detection capability of the terminal device.

In some implementations, the PDCCH detection capability corresponding to the first carrier is limited by the twelfth parameter. For example, the maximum number of times of the blind detections for PDCCHs corresponding to the first carrier does not exceed $M_{\text{PDCCH}}^{\text{total,slot},\mu}$ shown in formula (7), and the maximum number of times of blind channel estimations for non-overlapped CCEs corresponding to the first carrier does not exceed $C_{\text{PDCCH}}^{\text{max,slot},\mu}$ shown in formula (8).

In the fourth embodiment, in the total PDCCH detection capability corresponding to the target carriers, the PDCCH detection capability corresponding to the first carrier is proportional to the bandwidth proportion of the first carrier. Therefore, the determination of the PDCCH detection capability corresponding to the first carrier based on this method can not only increase the flexibility of the resource allocation, but also adapting to the scheduling requirement of the first carrier, thereby helping to make full use of the PDCCH detection capability of the terminal device.

**Fifth embodiment**

In some implementations, the terminal device may determine the PDCCH detection capability corresponding to the first carrier among multiple carriers according to the second parameter and the third parameter.

In some implementations, the PDCCH detection capability corresponding to the first carrier may be determined based on the second parameter and the third parameter. The third parameter may be determined based on the fourth parameter, the fifth parameter, the eighth parameter and the ninth parameter.

Furthermore, the PDCCH detection capability corresponding to the first carrier may be determined based on a twelfth parameter. The twelfth parameter may be determined based on a product of the fourth parameter, the fifth parameter, the second parameter and the tenth parameter. The tenth parameter is determined based on a quotient of the ninth parameter and the eighth parameter. That is to say, the twelfth parameter is determined based on the following formula: $\left\lfloor N \cdot M \cdot \dfrac{k}{n} \cdot \beta_j \right\rfloor$. Herein, N represents the fourth parameter, M represents the fifth parameter, n represents the eighth parameter, k represents the ninth parameter, $\dfrac{k}{n}$ represents the tenth parameter, $\beta_j$ represents the second parameter, j is a positive integer greater than or equal to 0 and less than k, and $\lfloor \cdot \rfloor$ represents rounding down.

As an example, the j-th carrier among the multiple carriers is used as the first carrier, and the target carriers are the carriers having the same subcarrier spacing. $M_{\mathrm{PDCCH}}^{\mathrm{total,slot},\mu}$ represents the twelfth parameter, $\left\lfloor N \cdot M \cdot \dfrac{k}{n} \cdot \beta_j \right\rfloor$ may also be expressed as the following formula (9).

$$M_{\mathrm{PDCCH}}^{\mathrm{total,slot},\mu} = \left\lfloor N_{\mathrm{cells}}^{\mathrm{cap}} \cdot M_{\mathrm{PDCCH}}^{single,\mathrm{slot},\mu} \cdot \left(N_{\mathrm{cells}}^{\mathrm{DL},\mu}\right) \Big/ \sum_{j=0}^{3} N_{\mathrm{cells}}^{\mathrm{DL},j} \cdot \beta_j \right\rfloor \quad (9)$$

Herein, $N_{\mathrm{cells}}^{\mathrm{cap}}$ represents the fourth parameter, and has the meaning of the maximum number of carriers on which the terminal device is able to perform the PDCCH detection. $M_{\mathrm{PDCCH}}^{single,\mathrm{slot},\mu}$ represents the fifth parameter and has the meaning of the maximum number of times of PDCCH detections performed by the terminal device on a single carrier. $N_{\mathrm{cells}}^{\mathrm{DL},\mu}$ represents the ninth parameter and has the meaning of the number of target carriers among the multiple carriers (the target carriers correspond to the same $\mu$). $\sum_{j=0}^{3} N_{\mathrm{cells}}^{\mathrm{DL},j}$ represents the eighth parameter and has the meaning of the number of the multiple carriers. $\left(N_{\mathrm{cells}}^{\mathrm{DL},\mu}\right)/\sum_{j=0}^{3} N_{\mathrm{cells}}^{\mathrm{DL},j}$ represents the tenth parameter and has the meaning of a proportion of the number of target carriers to the number of the multiple carriers. $\beta_j$ represents the second parameter and has the meaning of an allocation coefficient of the PDCCH detection capability corresponding to the j-th carrier among the multiple carriers, i.e., an allocation coefficient of the PDCCH detection capability corresponding to the first carrier. The PDCCH detection capability of the first carrier determined based on the aforementioned formula may represent the maximum number of times of the blind detections for PDCCHs on the first carrier. In the sum of the numbers of times of PDCCH detections corresponding to the target carriers, the maximum number of times of the blind detections for PDCCHs on the first carrier is proportional to the allocation coefficient of the PDCCH detection capability corresponding to the first carrier. Therefore, the determination of the maximum number of times of the blind detections for PDCCHs on the first carrier based on this method can not only increase the flexibility of the resource allocation, but also helping to match the scheduling requirement of the network device

In other implementations, the PDCCH detection capability corresponding to the first carrier may be determined based on the second parameter and the third parameter. The third parameter may be determined based on the fourth parameter, the sixth parameter, the eighth parameter and the ninth parameter.

Furthermore, the PDCCH detection capability corresponding to the first carrier may be determined based on a twelfth parameter. The twelfth parameter may be determined based on a product of the fourth parameter, the sixth parameter, the second parameter and the tenth parameter. The tenth parameter is determined based on a quotient of the ninth parameter and the eighth parameter. That is to say, the twelfth parameter is determined based on the following

formula: $\left\lfloor N \cdot C \cdot \dfrac{k}{n} \cdot \beta_j \right\rfloor$. Herein, N represents the fourth parameter, C represents the sixth parameter, n represents the eighth parameter, k represents the ninth parameter, $\dfrac{k}{n}$ represents the tenth parameter, $\beta_j$ represents the second parameter, j is a positive integer greater than or equal to 0 and less than k, and $\lfloor \cdot \rfloor$ represents rounding down.

As an example, the j-th carrier among the multiple carriers is used as the first carrier, and the target carriers are the carriers having the same subcarrier spacing. $C_{\mathrm{PDCCH}}^{\mathrm{max,slot},\mu}$ represents the twelfth parameter, $\left\lfloor N \cdot C \cdot \dfrac{k}{n} \cdot \beta_j \right\rfloor$ may also be expressed as the following formula (10).

$$C_{\mathrm{PDCCH}}^{\mathrm{max,slot},\mu} = \left\lfloor N_{\mathrm{cells}}^{\mathrm{cap}} \cdot C_{\mathrm{PDCCH}}^{single,\mathrm{slot},\mu} \cdot \left(N_{\mathrm{cells}}^{\mathrm{DL},\mu}\right) \Big/ \sum_{j=0}^{3} N_{\mathrm{cells}}^{\mathrm{DL},j} \cdot \beta_j \right\rfloor \quad (10)$$

Herein, $N_{\mathrm{cells}}^{\mathrm{cap}}$ represents the fourth parameter, and has the meaning of the maximum number of carriers on which the terminal device is able to perform the PDCCH detection. $C_{\mathrm{PDCCH}}^{single,\mathrm{slot},\mu}$ represents the fifth parameter and has the meaning of the maximum number of non-overlapped CCEs for channel estimation on a single carrier. $N_{\mathrm{cells}}^{\mathrm{DL},\mu}$ represents the ninth parameter and has the meaning of the number of target carriers among the multiple carriers (the target carriers correspond to the same $\mu$). $\sum_{j=0}^{3} N_{\mathrm{cells}}^{\mathrm{DL},j}$ represents the eighth parameter and has the meaning of the number of the multiple carriers. $\left(N_{\mathrm{cells}}^{\mathrm{DL},\mu}\right) \Big/ \sum_{j=0}^{3} N_{\mathrm{cells}}^{\mathrm{DL},j}$ represents the tenth parameter and has the meaning of a proportion of the number of target carriers to the number of the multiple carriers. $\beta_j$ represents the second parameter and has the meaning of an allocation coefficient of the PDCCH detection capability corresponding to the j-th carrier among the multiple carriers, i.e., an allocation coefficient of the PDCCH detection capability corresponding to the first carrier. The PDCCH detection capability of the first carrier determined based on the aforementioned formula may represent the maximum number of times of blind channel estimations for non-overlapped CCEs on the first carrier. In the sum of the numbers of times of blind channel estimations for non-overlapped CCEs corresponding to the target carriers, the maximum number of times of blind channel estimations for non-overlapped CCEs on the first carrier is proportional to the allocation coefficient of the PDCCH detection capability corresponding to the first carrier. Therefore, the determination of the maximum number of times of blind channel estimations for non-overlapped CCEs on the first carrier based on this method can not only increase the flexibility of the resource allocation, but also helping match the scheduling requirement of the network device.

In some implementations, the PDCCH detection capability corresponding to the first carrier is limited by the twelfth parameter. For example, the maximum number of times of the blind detections for PDCCHs corresponding to the first carrier does not exceed $M_{\mathrm{PDCCH}}^{\mathrm{total,slot},\mu}$ shown in formula (9), and the maximum number of times of blind channel estimations for non-overlapped CCEs corresponding to the first carrier does not exceed $C_{\mathrm{PDCCH}}^{\mathrm{max,slot},\mu}$ shown in formula (10).

In the fifth embodiment, in the total PDCCH detection capability corresponding to the target carriers, the PDCCH detection capability corresponding to the first carrier is proportional to the allocation coefficient of the PDCCH detection capability corresponding to the first carrier. Therefore, the determination of the PDCCH detection capability corresponding to the first carrier based on this method can not only increase the flexibility of the resource allocation, but also helping to match the scheduling requirement of the network device.

**Sixth embodiment**

In some implementations, the terminal device may determine the PDCCH detection capability corresponding to the first carrier among multiple carriers according to the third parameter.

In some implementations, the PDCCH detection capability corresponding to the first carrier may be determined based on only the third parameter. Furthermore, the PDCCH detection capability corresponding to the first carrier may be limitedly determined based on the third parameter. For example, the maximum number of times of the blind detections for PDCCHs corresponding to the first carrier does not exceed $M_{\text{PDCCH}}^{\text{total,slot},\mu}$ shown in formula (1), and the maximum number of times of blind channel estimations for non-overlapped CCEs corresponding to the first carrier does not exceed $C_{\text{PDCCH}}^{\text{total,slot},\mu}$ shown in formula (2).

In the sixth embodiment, the PDCCH detection capability corresponding to the first carrier is limited by the total PDCCH detection capability corresponding to the target carriers among the multiple carriers. Based on this, the carriers having the same carrier attribute are able to share the total PDCCH detection capability, and the PDCCH detection capabilities of the multiple carriers can be allocated more flexibly.

**Seventh embodiment**

In some implementations, the terminal device may determine the PDCCH detection capability corresponding to the first carrier among multiple carriers according to the first parameter and the second parameter.

In some implementations, the PDCCH detection capability corresponding to the first carrier may be determined based on the first parameter, the second parameter, the fourth parameter, the fifth parameter and the seventh parameter.

Furthermore, the PDCCH detection capability corresponding to the first carrier may be determined based on a twelfth parameter. The twelfth parameter may be determined based on a product of the fourth parameter, the fifth parameter, the thirteenth parameter and the second parameter. The thirteenth parameter is determined based on a quotient of the first parameter and the seventh parameter. That is to say, the twelfth parameter is determined based on the following formula: $\left\lfloor N \cdot M \cdot B_j / \sum_{i=0}^{n-1} B_i \cdot \beta_j \right\rfloor$. Herein, N represents the fourth parameter, N represents the fifth parameter, $\sum_{i=0}^{n-1} B_i$ represents the seventh parameter, $B_j$ represents the first parameter, $B_j / \sum_{i=0}^{n-1} B_i$ represents the thirteenth parameter, $\beta_j$ represents the second parameter, both i and j are positive integers greater than or equal to 0 and less than n, n represents the eighth parameter, $\Sigma$ represents summation, and $\lfloor \cdot \rfloor$ represents rounding down.

As an example, the j-th carrier among the multiple carriers is used as the first carrier, and $\lfloor \cdot \rfloor$ represents the twelfth parameter, $\left\lfloor N \cdot M \cdot B_j / \sum_{i=0}^{n-1} B_i \right\rfloor$ may also be expressed as the following formula (11).

$$M_{\text{PDCCH}}^{max,\text{slot},\mu} = \left\lfloor N_{\text{cells}}^{\text{cap}} \cdot M_{\text{PDCCH}}^{single,\text{slot},\mu} \cdot B_j \middle/ \sum_{i=0}^{k-1} B_i \cdot \beta_j \right\rfloor \quad (11)$$

Herein, $N_{\text{cells}}^{\text{cap}}$ represents the fourth parameter, and has the meaning of the maximum number of carriers on which the terminal device is able to perform the PDCCH detection. $M_{\text{PDCCH}}^{single,\text{slot},\mu}$ represents the fifth parameter and has the meaning of the maximum number of times of PDCCH detections performed by the terminal device on a single carrier. $B_j$ represents the first parameter and has the meaning of a bandwidth of the j-th carrier, i.e., the bandwidth of the first carrier. $B_i$ represents a bandwidth of the i-th carrier, i.e., a bandwidth of any one carrier among the multiple carriers. $\sum_{i=0}^{k-1} B_i$ represents the seventh parameter and has the meaning of the total bandwidth of the multiple carriers. $B_j / \sum_{i=0}^{k-1} B_i$ represents the thirteenth parameter and has the meaning of the proportion of the bandwidth of a certain one carrier among the multiple carriers to the total bandwidth of the multiple carriers. $\beta_j$ represents the second parameter and has the meaning of an allocation coefficient of the PDCCH detection capability corresponding to the j-th carrier among the multiple carriers, i.e., an allocation coefficient of the PDCCH detection capability corresponding to the first carrier. The PDCCH detection capability of the first carrier determined based on the aforementioned formula may represent the maximum number of times of the blind detections for PDCCHs on the first carrier, and the maximum number of times of the blind detections for PDCCHs on the first carrier is proportional to both the bandwidth proportion occupied by the first carrier to the multiple carriers and the allocation coefficient of the PDCCH detection capability corresponding to the first carrier. Therefore, the maximum number of times of the blind detections for PDCCHs on the first carrier can not only adapt to the scheduling requirement of the first carrier, but also helping to match the scheduling requirement of the network device.

In other implementations, the PDCCH detection capability corresponding to the first carrier may be determined based on the first parameter, the second parameter, the fourth parameter, the sixth parameter and the seventh parameter.

Furthermore, the PDCCH detection capability corresponding to the first carrier may be determined based on a twelfth parameter. The twelfth parameter may be determined based on a product of the fourth parameter, the sixth parameter, the thirteenth parameter and the second parameter. The thirteenth parameter is determined based on a quotient of the first parameter and the seventh parameter. That is to say, the twelfth parameter is determined based on the

following formula: $\left\lfloor N \cdot C \cdot B_j / \sum_{i=0}^{n-1} B_i \right\rfloor$ . Herein, N represents the fourth parameter, C represents the sixth parameter, $\sum_{i=0}^{n-1} B_i$ represents the seventh parameter, $B_j$ represents the first parameter, $B_j / \sum_{i=0}^{n-1} B_i$ represents

the thirteenth parameter, $\beta_j$ represents the second parameter, both i and j are positive integers greater than or equal to 0 and less than n, and n represents the eighth parameter, $\Sigma$ represents summation, and $\lfloor \cdot \rfloor$ represents rounding down.

As an example, the j-th carrier among the multiple carriers is used as the first carrier, and $C_{\mathrm{PDCCH}}^{\max,\mathrm{slot},\mu}$ represents

the twelfth parameter, $\left\lfloor N \cdot C \cdot B_j / \sum_{i=0}^{n-1} B_i \right\rfloor$ may also be expressed as the following formula (12).

$$C_{\mathrm{PDCCH}}^{\max,\mathrm{slot},\mu} = \left\lfloor N_{\mathrm{cells}}^{\mathrm{cap}} \cdot C_{\mathrm{PDCCH}}^{\mathrm{single},\mathrm{slot},\mu} \cdot B_j \middle/ \sum_{i=0}^{k-1} B_i \cdot \beta_j \right\rfloor \quad (12)$$

Herein, $N_{\mathrm{cells}}^{\mathrm{cap}}$ represents the fourth parameter, and has the meaning of the maximum number of carriers on which the terminal device is able to perform the PDCCH detection. $C_{\mathrm{PDCCH}}^{\mathrm{single},\mathrm{slot},\mu}$ represents the fifth parameter and has the meaning of the maximum number of non-overlapped CCEs for channel estimation on a single carrier. $B_j$ represents the first parameter and has the meaning of the bandwidth of the j-th carrier, i.e., the bandwidth of the first carrier. $B_i$ represents

the bandwidth of the i-th carrier, i.e., the bandwidth of any one carrier among the multiple carriers. $\sum_{i=0}^{k-1} B_i$ represents the seventh parameter and has the meaning of the total bandwidth of the multiple carriers. $B_j / \sum_{i=0}^{k-1} B_i$ represents the thirteenth parameter and has the meaning of the proportion of the bandwidth of a certain one carrier among the multiple carriers to the total bandwidth of the multiple carriers. $\beta_j$ represents the second parameter and has the meaning of an allocation coefficient of the PDCCH detection capability corresponding to the j-th carrier among the multiple carriers, i.e., an allocation coefficient of the PDCCH detection capability corresponding to the first carrier. The PDCCH detection capability of the first carrier determined based on the aforementioned formula may represent the maximum number of times of blind channel estimations for non-overlapped CCEs on the first carrier, and the maximum number of times of blind channel estimations for non-overlapped CCEs on the first carrier is proportional to both the bandwidth proportion occupied by the first carrier to the multiple carriers and the allocation coefficient of the PDCCH detection capability corresponding to the first carrier. Therefore, the maximum number of times of blind channel estimations for non-overlapped CCEs on the first carrier can not only adapt to the scheduling requirement of the first carrier, but also helping to match the scheduling requirement of the network device.

In the seventh embodiment, the PDCCH detection capability of the first carrier is proportional to the occupied bandwidth proportion of the first carrier to the multiple carriers, and is also proportional to the allocation coefficient of the PDCCH detection capability corresponding to the first carrier. The PDCCH detection capability not only adapts to the scheduling requirements of the first carrier, but also matching the requirements of network equipment, which is helpful to make full use of the PDCCH detection capability of the terminal equipment.

In some implementations, the method in the embodiments of the present disclosure may also be applied to frequency-domain resources with other types or granularities. That is to say, the carrier may be replaced with the frequency-domain resource with another type or granularity. For example, the carrier may be replaced with a frequency band, a wave band, a Bandwidth Part (BWP), or the like.

In some implementations, the method in the embodiments of the present disclosure may also be applied to a PDCCH enhancement scenario. For example, in the span-based PDCCH enhancement, for the time-frequency resources in units of spans, the PDCCH detection capability of the terminal device may be determined through the method in the embodiments of the present disclosure. For another example, for PDCCH enhancement in a multi-TRP scenario, i.e., PDCCH repetition, the PDCCH detection capability of the terminal device may also be determined through the method in the embodiments of the present disclosure.

In some implementations, the method in the embodiments of the present disclosure further includes: the terminal device receives a PDCCH sent by the network device. Furthermore, the method in the embodiments of the present disclosure further includes: the terminal device detects the PDCCH sent by the network device on an alternative resource or an alternative format, and the terminal device abandons the detection when the alternative resource or the alternative format is exceeded. Herein, the alternative resource may refer to a time-frequency resource, the alternative format may refer to a format of DCI, and the alternative resource or the alternative format may be determined based on the PDCCH detection capability of the terminal device. For example, it is determined based on operation 210 that the PDCCH detection capability of the terminal device is Q, the corresponding format of the DCI may be $\{F_0, F_1, ... F_{Q-1}\}$. When the terminal device detects the PDCCH sent by the network device, the terminal device only performs the detection on $\{F_0, F_1, ... F_{Q-1}\}$, and abandons the detection of the PDCCHs exceeding $\{F_0, F_1, ... F_{Q-1}\}$, to avoid exceeding the PDCCH detection capability of the terminal device.

As shown in FIG. 3, the embodiments of the present disclosure provide another method for channel detection. The method includes operation 310. In operation 310, a network device determines a corresponding PDCCH detection capability when a terminal device performs detection on a first carrier among multiple carriers, according to one or more of: a first parameter, a second parameter, and a third parameter. Herein, the first parameter is used to indicate a size of a bandwidth of a first carrier; the second parameter is used to indicate an allocation coefficient of a PDCCH detection capability corresponding to the first carrier; and the third parameter is used to indicate a total PDCCH detection capability corresponding to target carrier(s) among the multiple carriers. The target carrier has a same carrier attribute as the first carrier. In the embodiments of the present disclosure, the PDCCH detection capability corresponding to the single carrier may be determined according to factors of the bandwidth size of the single carrier among the multiple carriers, the allocation coefficient of the PDCCH detection capability corresponding to the single carrier among the multiple carriers, and the total PDCCH detection capability corresponding to the target carriers among the multiple carriers, which is helpful to more reasonably allocate the PDCCH detection capability corresponding to each of the multiple carriers.

In some implementations, the third parameter is determined based on one or more of: a fourth parameter, a fifth parameter, a sixth parameter, an eighth parameter and a ninth parameter. The fourth parameter is used to indicate a maximum number of carriers for PDCCH detection and determined by reporting of the terminal device. The fifth parameter is used to indicate a maximum number of times of PDCCH detections performed on a single carrier. The fifth parameter may be determined through communication protocol(s) or may be determined by a reporting of the terminal device. The sixth parameter is used to indicate the maximum number of non-overlapped CCEs for channel estimation on a single carrier. The sixth parameter may be determined through communication protocol(s) or may be determined by a reporting of the terminal device. The eighth parameter is used to indicate the number of the multiple carriers. The ninth parameter is used to indicate the number of target carriers among the multiple carriers. The third parameter determined based on one or more of the aforementioned parameters may represent the sum of the maximum number of times of blind detections for PDCCHs and/or the sum of the maximum numbers of times of blind channel estimations for non-overlapped CCEs.

In some implementations, the third parameter is determined based on the fourth parameter, the fifth parameter and the tenth parameter. The tenth parameter may be determined based on a quotient of the ninth parameter and the eighth parameter. Furthermore, the third parameter is determined based on the following formula: $\lfloor N \cdot M \cdot k/n \rfloor$. Herein, N represents the fourth parameter, N represents the fifth parameter, n represents the eighth parameter, k represents the ninth parameter, $\frac{k}{n}$ represents the tenth parameter, and $\lfloor \cdot \rfloor$ represents downward rounding. The third parameter determined based on the fourth parameter, the fifth parameter, the eighth parameter and the ninth parameter may represent the sum of the maximum number of times of blind detections for PDCCHs corresponding to the target carriers.

In some implementations, the third parameter is determined based on the fourth parameter, the sixth parameter, and the tenth parameter. The tenth parameter may be determined based on a quotient of the ninth parameter and the eighth parameter. Furthermore, the third parameter is determined based on the following formula: $\lfloor N \cdot C \cdot k/n \rfloor$. Herein, N represents the fourth parameter, C represents the sixth parameter, and n represents the eighth parameter, k represents the ninth parameter, $\frac{k}{n}$ represents the tenth parameter, and $\lfloor \cdot \rfloor$ represents downward rounding. The third parameter determined based on the fourth parameter, the sixth parameter, the eighth parameter and the ninth parameter may represent the sum of the maximum numbers of times of blind channel estimations for non-overlapped CCEs corresponding to the target carriers.

In some implementations, the PDCCH detection capability corresponding to the first carrier is further determined based on one or more of: a fourth parameter for indicating a maximum number of carriers for PDCCH detection; a fifth parameter for indicating a maximum number of times of PDCCH detections performed on a single carrier; a sixth parameter for indicating a maximum number of non-overlapped CCEs for channel estimation on a single carrier; a seventh parameter for indicating a total bandwidth of the multiple carriers; an eighth parameter for indicating a number of multiple carriers; a ninth parameter for indicating a number of target carriers among the multiple carriers; and an eleventh parameter for indicating a total bandwidth of the target carriers. In addition to the first parameter, the second parameter and the third parameter, introducing more parameters helps to more reasonably determine the PDCCH detection capability corresponding to the first carrier.

In some implementations, the PDCCH detection capability corresponding to the first carrier may be determined based on the first parameter, the fourth parameter, the fifth parameter and the seventh parameter. Furthermore, the PDCCH detection capability corresponding to the first carrier may be determined based on a twelfth parameter. The twelfth parameter may be determined based on a product of the fourth parameter, the fifth parameter and the thirteenth parameter. The thirteenth parameter is determined based on a quotient of the first parameter and the seventh parameter. That is to say, the twelfth parameter is determined based on the following formula: $\left\lfloor N \cdot M \cdot B_j / \sum_{i=0}^{n-1} B_i \right\rfloor$. Herein, N represents the fourth parameter, M represents the fifth parameter, $\sum_{i=0}^{n-1} B_i$ represents the seventh parameter, $B_j$ represents the first parameter, $B_j / \sum_{i=0}^{n-1} B_i$ represents the thirteenth parameter, both i and j are positive integers greater than or equal to 0 and less than n, and n represents the eighth parameter, $\Sigma$ represents summation, and $\lfloor \cdot \rfloor$ represents rounding down. The PDCCH detection capability of the first carrier determined based on the aforementioned formula may represent the maximum number of times of the blind detections for PDCCHs on the first carrier. The maximum number of times of the blind detections for PDCCHs on the first carrier is proportional to the bandwidth proportion occupied by the first carrier to the multiple carriers, and adapts to the scheduling requirement of the first carrier, which is helpful to make full use of the PDCCH detection capability of the terminal device.

In some implementations, the PDCCH detection capability corresponding to the first carrier may be determined based on the first parameter, the fourth parameter, the sixth parameter and the seventh parameter. Furthermore, the PDCCH detection capability corresponding to the first carrier may be determined based on a twelfth parameter. The twelfth parameter may be determined based on a product of the fourth parameter, the sixth parameter and the thirteenth parameter. The thirteenth parameter is determined based on a quotient of the first parameter and the seventh parameter. That is to say, the twelfth parameter is determined based on the following formula: $\left\lfloor N \cdot C \cdot B_j / \sum_{i=0}^{n-1} B_i \right\rfloor$. Herein, N represents the fourth parameter, C represents the sixth parameter, $\sum_{i=0}^{n-1} B_i$ represents the seventh parameter, $B_j$ represents the first parameter, $B_j / \sum_{i=0}^{n-1} B_i$ represents the thirteenth parameter, both i and j are positive integers greater than or equal to 0 and less than n, n represents the eighth parameter, $\Sigma$ represents summation, and $\lfloor \cdot \rfloor$ represents rounding down. The PDCCH detection capability of the first carrier determined based on the aforementioned formula may represent the maximum number of times of blind channel estimations for non-overlapped CCEs on the first carrier. The maximum number of times of blind channel estimations for non-overlapped CCEs on the first carrier is proportional to the bandwidth proportion occupied by the first carrier to the multiple carriers, and adapts to the scheduling requirement of the first carrier, which is helpful to make full use of the PDCCH detection capability of the terminal device.

In other implementations, the PDCCH detection capability corresponding to the first carrier may be determined based on the second parameter, the fourth parameter and the fifth parameter. Furthermore, the PDCCH detection capability corresponding to the first carrier may be determined based on a twelfth parameter. The twelfth parameter may be determined based on a product of the fourth parameter, the fifth parameter and the second parameter. That is to say, the twelfth parameter is determined based on the following formula: $\left\lfloor N \cdot M \cdot \beta_j \right\rfloor$. Herein, N represents the fourth parameter, M represents the fifth parameter, $\beta_j$ represents the second parameter, j is a positive integer greater than or equal to 0 and less than n, n represents the eighth parameter, and $\lfloor \cdot \rfloor$ represents rounding down. The PDCCH detection capability of the first carrier determined based on the aforementioned formula may represent the maximum number of times of the blind detections for PDCCHs on the first carrier. The maximum number of times of the blind detections for PDCCHs on the first carrier is proportional to the allocation coefficient of the PDCCH detection capability corresponding to the first carrier, and the allocation coefficient is determined by the network device, thereby helping to match the scheduling requirement of the network device.

In some implementations, the PDCCH detection capability corresponding to the first carrier may be determined based on the second parameter, the fourth parameter and the sixth parameter. Furthermore, the PDCCH detection capability corresponding to the first carrier may be determined based on a twelfth parameter. The twelfth parameter may be determined based on a product of the fourth parameter, the sixth parameter and the second parameter. That is to say, the twelfth parameter may be determined based on the following formula: $\lfloor N \cdot C \cdot \beta_j \rfloor$. Herein, N represents the fourth parameter, C represents the sixth parameter, $\beta_j$ represents the second parameter, j is a positive integer greater than or equal to 0 and less than n, n represents the eighth parameter, and $\lfloor \cdot \rfloor$ represents rounding down. The PDCCH detection capability of the first carrier determined based on the aforementioned formula may represent the maximum number of times of blind channel estimations for non-overlapped CCEs on the first carrier, and the maximum number of times of blind channel estimations for non-overlapped CCEs on the first carrier is proportional to the allocation coefficient of the PDCCH detection capability corresponding to the first carrier, and the allocation coefficient is determined by the network device, thereby helping to match the scheduling requirement of the network device.

In some implementations, the PDCCH detection capability corresponding to the first carrier is determined based on the third parameter and the twelfth parameter. Furthermore, the PDCCH detection capability corresponding to the first carrier is determined based on a minimum of the third parameter and the twelfth parameter. Therefore, the PDCCH detection capability corresponding to the first carrier is limited by both the bandwidth proportion of the first carrier or the allocation coefficient of the PDCCH detection capability, and the total PDCCH detection capability corresponding to the target carriers having the same carrier attribute as the first carrier, which not only increases the flexibility of resource allocation, but also making full use of the PDCCH detection capability of the terminal device.

In some implementations, the PDCCH detection capability corresponding to the first carrier may be determined based on the first parameter, the third parameter and the eleventh parameter. The third parameter may be determined based on the fourth parameter, the fifth parameter, the eighth parameter and the ninth parameter. Furthermore, the PDCCH detection capability corresponding to the first carrier may be determined based on a twelfth parameter. The twelfth parameter may be determined based on the fourth parameter, the fifth parameter, the tenth parameter and the fourteenth parameter. The tenth parameter is determined based on a quotient of the ninth parameter and the eighth parameter, and the fourteenth parameter is determined based on a quotient of the first parameter and the eleventh parameter. That is to say, the twelfth parameter is determined based on the following formula: $\left\lfloor N \cdot M \cdot \frac{k}{n} \cdot B_j^u \Big/ \sum_{i=0}^{k-1} B_i^u \right\rfloor$. Herein, N represents the fourth parameter, M represents the fifth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u \Big/ \sum_{i=0}^{k-1} B_i^u$ represents the fourteenth parameter, both i and j are positive integers greater than or equal to 0 and less than k, u represents the carrier attribute, $\Sigma$ represents summation, and $\lfloor \cdot \rfloor$ represents rounding down. The PDCCH detection capability of the first carrier determined based on the aforementioned formula may represent the maximum number of times of the blind detections for PDCCHs on the first carrier. In the sum of the numbers of times of PDCCH detections corresponding to the target carriers, the maximum number of times of the blind detections for PDCCHs on the first carrier is proportional to the bandwidth proportion of the first carrier. Therefore, the determination of the maximum number of times of the blind detections for PDCCHs on the first carrier based on this formula can not only increase the flexibility of the resource allocation, but also adapting to the scheduling requirement of the first carrier, thereby helping to make full use of the PDCCH detection capability of the terminal device.

In some implementations, the PDCCH detection capability corresponding to the first carrier may be determined based on the first parameter, the third parameter and the eleventh parameter. The third parameter may be determined based on the fourth parameter, the sixth parameter, the eighth parameter and the ninth parameter. Furthermore, the PDCCH detection capability corresponding to the first carrier may be determined based on a twelfth parameter. The twelfth parameter may be determined based on the fourth parameter, the sixth parameter, the tenth parameter and the fourteenth parameter. The tenth parameter is determined based on a quotient of the ninth parameter and the eighth parameter. The fourteenth parameter is determined based on a quotient of the first parameter and the eleventh parameter. That is to say, the twelfth parameter is determined based on the following formula: $\left\lfloor N \cdot C \cdot \frac{k}{n} \cdot B_j^u \Big/ \sum_{i=0}^{k-1} B_i^u \right\rfloor$. Herein, N represents the fourth parameter, C represents the sixth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u / \sum_{i=0}^{k-1} B_i^u$ represents the fourteenth parameter, both i and j are positive integers greater than or equal to 0 and less than k, u represents the carrier attribute, $\Sigma$ represents summation, and $\lfloor \cdot \rfloor$ represents rounding down. The PDCCH detection capability of the first carrier determined based on the aforementioned formula may represent the maximum number of times of blind channel estimations for non-overlapped CCEs on the first carrier. In the sum of the numbers of times of blind channel estimations for non-overlapped CCEs corresponding to the target carriers, the maximum number of times of blind channel estimations for non-overlapped CCEs on the first carrier is proportional to the bandwidth proportion of the first carrier. Therefore, the determination of the maximum number of times of blind channel estimations for non-overlapped CCEs on the first carrier based on this formula can not only increase the flexibility of the resource allocation, but also adapting to the scheduling requirement of the first carrier, thereby helping to make full use of the PDCCH detection capability of the terminal device.

In some implementations, the PDCCH detection capability corresponding to the first carrier may be determined based on the second parameter and the third parameter. The third parameter may be determined based on the fourth parameter, the fifth parameter, the eighth parameter and the ninth parameter. Furthermore, the PDCCH detection capability corresponding to the first carrier may be determined based on a twelfth parameter. The twelfth parameter may be determined based on a product of the fourth parameter, the fifth parameter, the second parameter and the tenth parameter. The tenth parameter is determined based on a quotient of the ninth parameter and the eighth parameter. That is to say, the twelfth parameter is determined based on the following formula: $\left\lfloor N \cdot M \cdot \frac{k}{n} \cdot \beta_j \right\rfloor$. Herein, N represents the fourth parameter, M represents the fifth parameter, n represents the eighth parameter, k represents the ninth parameter, $\frac{k}{n}$ represents the tenth parameter, $\beta_j$ represents the second parameter, j is a positive integer greater than or equal to 0 and less than k, and $\lfloor \cdot \rfloor$ represents rounding down. The PDCCH detection capability of the first carrier determined based on the aforementioned formula may represent the maximum number of times of the blind detections for PDCCHs on the first carrier. In the sum of the numbers of times of PDCCH detections corresponding to the target carriers, the maximum number of times of the blind detections for PDCCHs on the first carrier is proportional to the allocation coefficient of the PDCCH detection capability corresponding to the first carrier. Therefore, the determination of the maximum number of times of the blind detections for PDCCHs on the first carrier based on this method can not only increase the flexibility of the resource allocation, but also helping to match the scheduling requirement of the network device

In some implementations, the PDCCH detection capability corresponding to the first carrier may be determined based on the second parameter and the third parameter. The third parameter may be determined based on the fourth parameter, the sixth parameter, the eighth parameter and the ninth parameter. Furthermore, the PDCCH detection capability corresponding to the first carrier may be determined based on a twelfth parameter. The twelfth parameter may be determined based on a product of the fourth parameter, the sixth parameter, the second parameter and the tenth parameter. The tenth parameter is determined based on a quotient of the ninth parameter and the eighth parameter. That is to say, the twelfth parameter is determined based on the following formula: $\left\lfloor N \cdot C \cdot \frac{k}{n} \cdot \beta_j \right\rfloor$. Herein, N represents the fourth parameter, C represents the sixth parameter, n represents the eighth parameter, k represents the ninth parameter, $\frac{k}{n}$ represents the tenth parameter, $\beta_j$ represents the second parameter, j is a positive integer greater than or equal to 0 and less than k, and $\lfloor \cdot \rfloor$ represents rounding down. The PDCCH detection capability of the first carrier determined based on the aforementioned formula may represent the maximum number of times of blind channel estimations for non-overlapped CCEs on the first carrier. In the sum of the numbers of times of blind channel estimations for non-overlapped CCEs corresponding to the target carriers, the maximum number of times of blind channel estimations for non-overlapped CCEs on the first carrier is proportional to the allocation coefficient of the PDCCH detection capability corresponding to the first carrier. Therefore, the determination of the maximum number of times of blind channel estimations for non-overlapped CCEs on the first carrier based on this method can not only increase the flexibility of the resource allocation, but also helping to match the scheduling requirement of the network device.

In some implementations, the PDCCH detection capability corresponding to the first carrier is determined based on only the third parameter. Furthermore, the PDCCH detection capability corresponding to the first carrier is limited by the third parameter. That is to say, the PDCCH detection capability corresponding to the first carrier is limited by the total PDCCH detection capability corresponding to the target carriers among the multiple carriers. Based on this, the carriers having the same carrier attribute are able to share the total PDCCH detection capability, and the PDCCH detection capabilities of the multiple carriers can be allocated more flexibly.

In some implementations, the PDCCH detection capability corresponding to the first carrier may be determined based on the first parameter, the second parameter, the fourth parameter, the fifth parameter and the seventh parameter. Furthermore, the PDCCH detection capability corresponding to the first carrier may be determined based on a twelfth parameter. The twelfth parameter may be determined based on a product of the fourth parameter, the fifth parameter, the thirteenth parameter and the second parameter. The thirteenth parameter is determined based on a quotient of the first parameter and the seventh parameter. That is to say, the twelfth parameter is determined based on the following formula:

$\left\lfloor N \cdot M \cdot B_j / \sum_{i=0}^{n-1} B_i \cdot \beta_j \right\rfloor$ . Herein, N represents the fourth parameter, M represents the fifth parameter, $\sum_{i=0}^{n-1} B_i$

represents the seventh parameter, $B_j$ represents the first parameter, $B_j / \sum_{i=0}^{n-1} B_i$ represents the thirteenth parameter, $\beta_j$ represents the second parameter, both i and j are positive integers greater than or equal to 0 and less than n, n represents the eighth parameter, $\Sigma$ represents summation, and $\lfloor \cdot \rfloor$ represents rounding down. The PDCCH detection capability of the first carrier determined based on the aforementioned formula may represent the maximum number of times of the blind detections for PDCCHs on the first carrier. The maximum number of times of the blind detections for PDCCHs on the first carrier is proportional to both the bandwidth proportion occupied by the first carrier to the multiple carriers and the allocation coefficient of the PDCCH detection capability corresponding to the first carrier. Therefore, the maximum number of times of the blind detections for PDCCHs on the first carrier can not only adapt to the scheduling requirement of the first carrier, but also helping to match the scheduling requirement of the network device.

In some implementations, the PDCCH detection capability corresponding to the first carrier may be determined based on the first parameter, the second parameter, the fourth parameter, the sixth parameter and the seventh parameter. Furthermore, the PDCCH detection capability corresponding to the first carrier may be determined based on a twelfth parameter. The twelfth parameter may be determined based on a product of the fourth parameter, the sixth parameter, the thirteenth parameter and the second parameter. The thirteenth parameter is determined based on a quotient of the first parameter and the seventh parameter. That is to say, the twelfth parameter is determined based on the following formula:

$\left\lfloor N \cdot C \cdot B_j / \sum_{i=0}^{n-1} B_i \right\rfloor$ . Herein, N represents the fourth parameter, C represents the sixth parameter, $\sum_{i=0}^{n-1} B_i$

represents the seventh parameter, $B_j$ represents the first parameter, $B_j / \sum_{i=0}^{n-1} B_i$ represents the thirteenth parameter, $\beta_j$ represents the second parameter, both i and j are positive integers greater than or equal to 0 and less than n, n represents the eighth parameter, $\Sigma$ represents summation, and $\lfloor \cdot \rfloor$ represents rounding down. The PDCCH detection capability of the first carrier determined based on the aforementioned formula may represent the maximum number of times of blind channel estimations for non-overlapped CCEs on the first carrier. The maximum number of times of blind channel estimations for non-overlapped CCEs on the first carrier is proportional to both the bandwidth proportion occupied by the first carrier to the multiple carriers and the allocation coefficient of the PDCCH detection capability corresponding to the first carrier. Therefore, the maximum number of times of blind channel estimations for non-overlapped CCEs on the first carrier can not only adapt to the scheduling requirement of the first carrier, but also helping to match the scheduling requirement of the network device.

In some implementations, the carrier attribute includes one or more of the following: a subcarrier spacing; a type of the PDCCH detection. The type of the PDCCH detection includes: detection in units of slots, or detection in units of spans.

In some implementations, the second parameter is determined based on configuration information of the network device.

In some implementations, the method in the embodiments of the present disclosure may also be applied to frequency-domain resources with other types or granularities. That is to say, the carrier may be replaced with the frequency-domain resource with another type or granularity. For example, the carrier may be replaced with a frequency band, a wave band, a BWP, or the like.

In some implementations, the method in the embodiments of the present disclosure may also be applied to a PDCCH enhancement scenario. For example, in the span-based PDCCH enhancement, for the time-frequency resources in units of spans, the PDCCH detection capability of the terminal device may be determined through the method in the embodiments of the present disclosure. For another example, for PDCCH enhancement in a multi-TRP scenario, i.e., PDCCH repetition, the PDCCH detection capability of the terminal device may also be determined through the method in the embodiments of the present disclosure.

In some implementations, the method further includes: the network device sends a PDCCH to the terminal device, where a resource occupied by the PDCCH is located within an alternative resource or conforms to an alternative format. Herein, the alternative resource may refer to a time-frequency resource, the alternative format may refer to a format of DCI, and the alternative resource or the alternative format may be determined based on the PDCCH detection capability of the terminal device. For example, it is determined based on operation 310 that the PDCCH detection capability of the terminal device for the first carrier among the multiple carriers is Q, the corresponding alternative format may be $\{F_0, F_1, ... F_{Q-1}\}$. When the network device sends the PDCCH to the terminal device, the network device may adopt the format of $\{F_0, F_1, ... F_{Q-1}\}$ to send, which is helpful to avoid the sent PDCCH exceeding the detection capability of the terminal device.

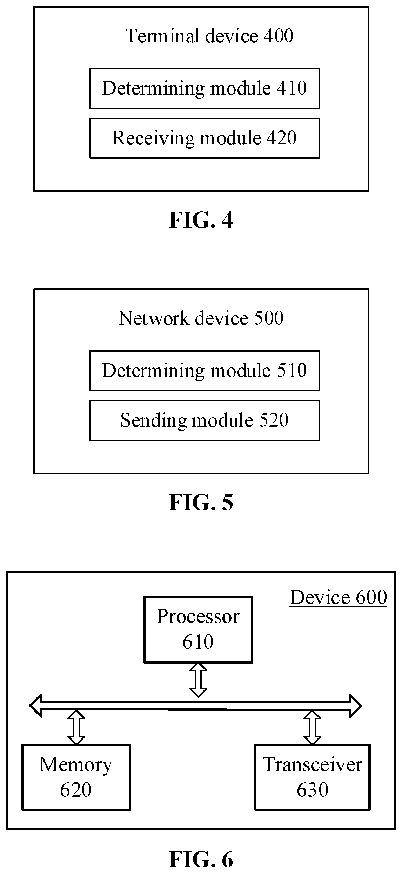

The method embodiments of the present disclosure are described in detail above with reference to FIG. 1 to FIG. 3, and device embodiments of the present disclosure are described in detail below with reference to FIG. 4 to FIG. 6. It is to be understood that the method embodiments correspond to the device embodiments, and the portions not described in detail of the device embodiments may refer to the method embodiments.

As shown in FIG. 4, an embodiment of the present disclosure provides a terminal device 400. The terminal device includes a determining module 410. The determining module 410 is configured to determine a PDCCH detection capability corresponding to a first carrier among multiple carriers according to one or more of a first parameter, a second parameter and a third parameter. The first parameter is used to indicate a size of a bandwidth of a first carrier; the second parameter is used to indicate an allocation coefficient of a PDCCH detection capability corresponding to the first carrier; and the third parameter is used to indicate a total PDCCH detection capability corresponding to target carrier(s) among the multiple carriers. The target carrier has a same carrier attribute as the first carrier.

In some implementations, the third parameter is further determined based on one or more of: a fourth parameter for indicating a maximum number of carriers for PDCCH detection; a fifth parameter for indicating a maximum number of times of PDCCH detections performed on a single carrier; a sixth parameter for indicating a maximum number of non-overlapped CCEs for channel estimation on a single carrier; an eighth parameter for indicating a number of multiple carriers; and a ninth parameter for indicating a number of target carriers among the multiple carriers.

In some implementations, the third parameter is determined based on the fourth parameter, the fifth parameter and the tenth parameter. The tenth parameter may be determined based on a quotient of the ninth parameter and the eighth parameter. That is to say, the third parameter is determined based on the following formula: $\lfloor N \cdot M \cdot k/n \rfloor$. Herein, N represents the fourth parameter, M represents the fifth parameter, and n represents the eighth parameter, k represents the ninth parameter, $\dfrac{k}{n}$ represents the tenth parameter, and $\lfloor \cdot \rfloor$ represents downward rounding.

In some implementations, the third parameter is determined based on the fourth parameter, the sixth parameter, and the tenth parameter. The tenth parameter may be determined based on a quotient of the ninth parameter and the eighth parameter. That is to say, the third parameter is determined based on the following formula: $\lfloor N \cdot C \cdot k/n \rfloor$. Herein, N represents the fourth parameter, C represents the sixth parameter, and n represents the eighth parameter, k represents the ninth parameter, $\dfrac{k}{n}$ represents the tenth parameter, and $\lfloor \cdot \rfloor$ represents downward rounding.

In some implementations, the PDCCH detection capability corresponding to the first carrier is further determined based on one or more of: a fourth parameter for indicating a maximum number of carriers for PDCCH detection; a fifth parameter for indicating a maximum number of times of PDCCH detections performed on a single carrier; a sixth parameter for indicating a maximum number of non-overlapped CCEs for channel estimation on a single carrier; a seventh parameter for indicating a total bandwidth of the multiple carriers; an eighth parameter for indicating a number of multiple carriers; a ninth parameter for indicating a number of target carriers among the multiple carriers; and an eleventh parameter for indicating a total bandwidth of the target carriers.

In some implementations, the PDCCH detection capability corresponding to the first carrier may be determined based on the first parameter, the fourth parameter, the fifth parameter and the seventh parameter. Furthermore, the PDCCH detection capability corresponding to the first carrier may be determined based on a twelfth parameter. The twelfth parameter may be determined based on a product of the fourth parameter, the fifth parameter and the thirteenth parameter. The thirteenth parameter is determined based on a quotient of the first parameter and the seventh parameter. That is to say, the twelfth parameter is determined based on the following formula: $\lfloor N \cdot M \cdot B_j / \sum_{i=0}^{n-1} B_i \rfloor$. Herein, N represents the fourth parameter, M represents the fifth parameter, $\sum_{i=0}^{n-1} B_i$ represents the seventh parameter, $B_j$ represents the first parameter, $B_j / \sum_{i=0}^{n-1} B_i$ represents the thirteenth parameter, both i and j are positive integers greater than or equal to 0 and less than n, n represents the eighth parameter, $\Sigma$ represents summation, and $\lfloor \cdot \rfloor$ represents rounding down.

In some implementations, the PDCCH detection capability corresponding to the first carrier may be determined based on the first parameter, the fourth parameter, the sixth parameter and the seventh parameter. Furthermore, the PDCCH detection capability corresponding to the first carrier may be determined based on a twelfth parameter. The twelfth parameter may be determined based on a product of the fourth parameter, the sixth parameter and the thirteenth parameter. The thirteenth parameter is determined based on a quotient of the first parameter and the seventh parameter.

That is to say, the twelfth parameter is determined based on the following formula: $\left\lfloor N \cdot C \cdot B_j / \sum_{i=0}^{n-1} B_i \right\rfloor$. Herein, N represents the fourth parameter, C represents the sixth parameter, $\sum_{i=0}^{n-1} B_i$ represents the seventh parameter, $B_j$ represents the first parameter, $B_j / \sum_{i=0}^{n-1} B_i$ represents the thirteenth parameter, both i and j are positive integers greater than or equal to 0 and less than n, n represents the eighth parameter, $\Sigma$ represents summation, and $\lfloor \cdot \rfloor$ represents rounding down.

In other implementations, the PDCCH detection capability corresponding to the first carrier may be determined based on the second parameter, the fourth parameter and the fifth parameter. Furthermore, the PDCCH detection capability corresponding to the first carrier may be determined based on a twelfth parameter. The twelfth parameter may be determined based on a product of the fourth parameter, the fifth parameter and the second parameter. That is to say, the twelfth parameter is determined based on the following formula: $\left\lfloor N \cdot M \cdot \beta_j \right\rfloor$. Herein, N represents the fourth parameter, M represents the fifth parameter, $\beta_j$ represents the second parameter, j is a positive integer greater than or equal to 0 and less than n, n represents the eighth parameter, and $\lfloor \cdot \rfloor$ represents rounding down.

In some implementations, the PDCCH detection capability corresponding to the first carrier may be determined based on the second parameter, the fourth parameter and the sixth parameter. Furthermore, the PDCCH detection capability corresponding to the first carrier may be determined based on a twelfth parameter. The twelfth parameter may be determined based on a product of the fourth parameter, the sixth parameter and the second parameter. That is to say, the twelfth parameter is determined based on the following formula: $\left\lfloor N \cdot C \cdot \beta_j \right\rfloor$. Herein, N represents the fourth parameter, C represents the sixth parameter, $\beta_j$ represents the second parameter, j is a positive integer greater than or equal to 0 and less than n, n represents the eighth parameter, and $\lfloor \cdot \rfloor$ represents rounding down.

In some implementations, the PDCCH detection capability corresponding to the first carrier is determined based on the third parameter and the twelfth parameter. Furthermore, the PDCCH detection capability corresponding to the first carrier is determined based on a minimum of the third parameter and the twelfth parameter.

In some implementations, the PDCCH detection capability corresponding to the first carrier may be determined based on the first parameter, the third parameter and the eleventh parameter. The third parameter may be determined based on the fourth parameter, the fifth parameter, the eighth parameter and the ninth parameter. Furthermore, the PDCCH detection capability corresponding to the first carrier may be determined based on a twelfth parameter. The twelfth parameter may be determined based on the fourth parameter, the fifth parameter, the tenth parameter and the fourteenth parameter. The tenth parameter is determined based on a quotient of the ninth parameter and the eighth parameter, and the fourteenth parameter is determined based on a quotient of the first parameter and the eleventh parameter. That is to say, the twelfth parameter is determined based on the following formula: $\left\lfloor N \cdot M \cdot \frac{k}{n} \cdot B_j^u / \sum_{i=0}^{k-1} B_i^u \right\rfloor$. Herein, N represents the fourth parameter, M represents the fifth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u / \sum_{i=0}^{k-1} B_i^u$ represents the fourteenth parameter, both i and j are positive integers greater than or equal to 0 and less than k, u represents the carrier attribute, $\Sigma$ represents summation, and $\lfloor \cdot \rfloor$ represents rounding down.

In some implementations, the PDCCH detection capability corresponding to the first carrier may be determined based on the first parameter, the third parameter and the eleventh parameter. The third parameter may be determined based on the fourth parameter, the sixth parameter, the eighth parameter and the ninth parameter. Furthermore, the PDCCH detection capability corresponding to the first carrier may be determined based on a twelfth parameter. The twelfth parameter may be determined based on the fourth parameter, the sixth parameter, the tenth parameter and the fourteenth parameter. The tenth parameter is determined based on a quotient of the ninth parameter and the eighth parameter, and the fourteenth parameter is determined based on a quotient of the first parameter and the eleventh parameter. That is to say, the twelfth parameter is determined based on the following formula: $\left\lfloor N \cdot C \cdot \frac{k}{n} \cdot B_j^u / \sum_{i=0}^{k-1} B_i^u \right\rfloor$ . Herein, N represents the fourth parameter, C represents the sixth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u / \sum_{i=0}^{k-1} B_i^u$ represents the fourteenth parameter, both i and j are positive integers greater than or equal to 0 and less than k, u represents the carrier attribute, $\Sigma$ represents summation, and $\lfloor \cdot \rfloor$ represents rounding down.

In some implementations, the PDCCH detection capability corresponding to the first carrier may be determined based on the second parameter and the third parameter. The third parameter may be determined based on the fourth parameter, the fifth parameter, the eighth parameter and the ninth parameter. Furthermore, the PDCCH detection capability corresponding to the first carrier may be determined based on a twelfth parameter. The twelfth parameter may be determined based on a product of the fourth parameter, the fifth parameter, the second parameter and the tenth parameter. The tenth parameter is determined based on a quotient of the ninth parameter and the eighth parameter. That is to say, the twelfth parameter is determined based on the following formula: $\left\lfloor N \cdot M \cdot \frac{k}{n} \cdot \beta_j \right\rfloor$ . Herein, N represents the fourth parameter, M represents the fifth parameter, n represents the eighth parameter, k represents the ninth parameter, $\frac{k}{n}$ represents the tenth parameter, $\beta_j$ represents the second parameter, j is a positive integer greater than or equal to 0 and less than k, and $\lfloor \cdot \rfloor$ represents rounding down.

In some implementations, the PDCCH detection capability corresponding to the first carrier may be determined based on the second parameter and the third parameter. The third parameter may be determined based on the fourth parameter, the sixth parameter, the eighth parameter and the ninth parameter. Furthermore, the PDCCH detection capability corresponding to the first carrier may be determined based on a twelfth parameter. The twelfth parameter may be determined based on a product of the fourth parameter, the sixth parameter, the second parameter and the tenth parameter. The tenth parameter is determined based on a quotient of the ninth parameter and the eighth parameter. That is to say, the twelfth parameter is determined based on the following formula: $\left\lfloor N \cdot C \cdot \frac{k}{n} \cdot \beta_j \right\rfloor$ . Herein, N represents the fourth parameter, C represents the sixth parameter, n represents the eighth parameter, k represents the ninth parameter, $\frac{k}{n}$ represents the tenth parameter, $\beta_j$ represents the second parameter, j is a positive integer greater than or equal to 0 and less than k, and $\lfloor \cdot \rfloor$ represents rounding down.

In some implementations, the PDCCH detection capability corresponding to the first carrier is determined based on only the third parameter.

In some implementations, the PDCCH detection capability corresponding to the first carrier may be determined based on the first parameter, the second parameter, the fourth parameter, the fifth parameter and the seventh parameter. Furthermore, the PDCCH detection capability corresponding to the first carrier may be determined based on a twelfth parameter. The twelfth parameter may be determined based on a product of the fourth parameter, the fifth parameter, the thirteenth parameter and the second parameter. The thirteenth parameter is determined based on a quotient of the first parameter and the seventh parameter. That is to say, the twelfth parameter is determined based on the following formula: $\left\lfloor N \cdot M \cdot B_j / \sum_{i=0}^{n-1} B_i \cdot \beta_j \right\rfloor$ . Herein, N represents the fourth parameter, M represents the fifth parameter, $\sum_{i=0}^{n-1} B_i$ represents the seventh parameter, $B_j$ represents the first parameter, $B_j / \sum_{i=0}^{n-1} B_i$ represents the thirteenth parameter, $\beta_j$ represents the second parameter, both i and j are positive integers greater than or equal to 0 and less than n, n represents

the eighth parameter, $\Sigma$ represents summation, and $\lfloor \cdot \rfloor$ represents rounding down.

In some implementations, the PDCCH detection capability corresponding to the first carrier may be determined based on the first parameter, the second parameter, the fourth parameter, the sixth parameter and the seventh parameter. Furthermore, the PDCCH detection capability corresponding to the first carrier may be determined based on a twelfth parameter. The twelfth parameter may be determined based on a product of the fourth parameter, the sixth parameter, the thirteenth parameter and the second parameter. The thirteenth parameter is determined based on a quotient of the first parameter and the seventh parameter. That is to say, the twelfth parameter is determined based on the following formula:

$\left\lfloor N \cdot C \cdot B_j / \sum_{i=0}^{n-1} B_i \right\rfloor$ . Herein, N represents the fourth parameter, C represents the sixth parameter, $\sum_{i=0}^{n-1} B_i$

represents the seventh parameter, $B_j$ represents the first parameter, $B_j / \sum_{i=0}^{n-1} B_i$ represents the thirteenth parameter, $\beta_j$ represents the second parameter, both i and j are positive integers greater than or equal to 0 and less than n, n represents the eighth parameter, $\Sigma$ represents summation, and $\lfloor \cdot \rfloor$ represents rounding down.

In some implementations, the carrier attribute includes one or more of the following: a subcarrier spacing; a type of the PDCCH detection. The type of the PDCCH detection includes: detection in units of slots, or detection in units of spans.

In some implementations, the second parameter is determined based on configuration information of the network device.

In some implementations, the determining module 410 is further configured to determine a PDCCH detection capability corresponding to the first carrier among the multiple carriers in a PDCCH enhancement scenario. The PDCCH enhancement scenario may be span-based PDCCH enhancement or PDCCH enhancement in a multi-TRP scenario.

In some implementations, the terminal device 400 further includes a receiving module 420 configured to receive a PDCCH sent by the network device.

In some implementations, the determining module 410 is further configured to detect the PDCCH sent by the network device on an alternative resource or an alternative format, and the terminal device abandons the detection when the alternative resource or the alternative format is exceeded.

As shown in FIG. 5, an embodiment of the present disclosure provides a network device 500. The network device includes a determining module 510. The determining module 510 is configured to determine a corresponding PDCCH detection capability when a terminal device performs detection on a first carrier among multiple carriers, according to one or more of a first parameter, a second parameter and a third parameter. The first parameter is used to indicate a size of a bandwidth of a first carrier; the second parameter is used to indicate an allocation coefficient of a PDCCH detection capability corresponding to the first carrier; and the third parameter is used to indicate a total PDCCH detection capability corresponding to target carrier(s) among the multiple carriers. The target carrier has a same carrier attribute as the first carrier.

In some implementations, the third parameter is further determined based on one or more of: a fourth parameter for indicating a maximum number of carriers for PDCCH detection; a fifth parameter for indicating a maximum number of times of PDCCH detections performed on a single carrier; a sixth parameter for indicating a maximum number of non-overlapped CCEs for channel estimation on a single carrier; an eighth parameter for indicating a number of multiple carriers; and a ninth parameter for indicating a number of target carriers among the multiple carriers.

In some implementations, the third parameter is determined based on the fourth parameter, the fifth parameter and the tenth parameter. The tenth parameter may be determined based on a quotient of the ninth parameter and the eighth parameter. That is to say, the third parameter is determined based on the following formula: $\lfloor N \cdot M \cdot k/n \rfloor$ . Herein, N represents the fourth parameter, M represents the fifth parameter, n represents the eighth parameter, k represents the ninth parameter, $\frac{k}{n}$ represents the tenth parameter, and $\lfloor \cdot \rfloor$ represents downward rounding.

In some implementations, the third parameter is determined based on the fourth parameter, the sixth parameter and the tenth parameter. The tenth parameter may be determined based on a quotient of the ninth parameter and the eighth parameter. That is to say, the third parameter is determined based on the following formula: $\lfloor N \cdot C \cdot k/n \rfloor$ . Herein, N represents the fourth parameter, C represents the sixth parameter, and n represents the eighth parameter, k represents the ninth parameter, $\frac{k}{n}$ represents the tenth parameter, and $\lfloor \cdot \rfloor$ represents downward rounding.

In some implementations, the PDCCH detection capability corresponding to the first carrier is further determined based on one or more of: a fourth parameter for indicating a maximum number of carriers for PDCCH detection; a fifth parameter for indicating a maximum number of times of PDCCH detections performed on a single carrier; a sixth parameter for indicating a maximum number of non-overlapped CCEs for channel estimation on a single carrier; a seventh parameter for indicating a total bandwidth of the multiple carriers; an eighth parameter for indicating a number of multiple carriers; a ninth parameter for indicating a number of target carriers among the multiple carriers; and an eleventh parameter for indicating a total bandwidth of the target carriers.

In some implementations, the PDCCH detection capability corresponding to the first carrier may be determined based on the first parameter, the fourth parameter, the fifth parameter and the seventh parameter. Furthermore, the PDCCH detection capability corresponding to the first carrier may be determined based on a twelfth parameter. The twelfth parameter may be determined based on a product of the fourth parameter, the fifth parameter and the thirteenth parameter. The thirteenth parameter is determined based on a quotient of the first parameter and the seventh parameter. That is to say, the twelfth parameter is determined based on the following formula: $\left\lfloor N \cdot M \cdot B_j / \sum_{i=0}^{n-1} B_i \right\rfloor$. Herein, N represents the fourth parameter, M represents the fifth parameter, $\sum_{i=0}^{n-1} B_i$ represents the seventh parameter, $B_j$ represents the first parameter, $B_j / \sum_{i=0}^{n-1} B_i$ represents the thirteenth parameter, both i and j are positive integers greater than or equal to 0 and less than n, n represents the eighth parameter, $\Sigma$ represents summation, and $\lfloor \cdot \rfloor$ represents rounding down.

In some implementations, the PDCCH detection capability corresponding to the first carrier may be determined based on the first parameter, the fourth parameter, the sixth parameter and the seventh parameter. Furthermore, the PDCCH detection capability corresponding to the first carrier may be determined based on a twelfth parameter. The twelfth parameter may be determined based on a product of the fourth parameter, the sixth parameter and the thirteenth parameter. The thirteenth parameter is determined based on a quotient of the first parameter and the seventh parameter. That is to say, the twelfth parameter is determined based on the following formula: $\left\lfloor N \cdot C \cdot B_j / \sum_{i=0}^{n-1} B_i \right\rfloor$. Herein, N represents the fourth parameter, C represents the sixth parameter, $\sum_{i=0}^{n-1} B_i$ represents the seventh parameter, $B_j$ represents the first parameter, $B_j / \sum_{i=0}^{n-1} B_i$ represents the thirteenth parameter, both i and j are positive integers greater than or equal to 0 and less than n, n represents the eighth parameter, $\Sigma$ represents summation, and $\lfloor \cdot \rfloor$ represents rounding down.

In some implementations, the PDCCH detection capability corresponding to the first carrier may be determined based on the second parameter, the fourth parameter and the fifth parameter. Furthermore, the PDCCH detection capability corresponding to the first carrier may be determined based on a twelfth parameter. The twelfth parameter may be determined based on a product of the fourth parameter, the fifth parameter and the second parameter. That is to say, the twelfth parameter is determined based on the following formula: $\left\lfloor N \cdot M \cdot \beta_j \right\rfloor$. Herein, N represents the fourth parameter, M represents the fifth parameter, $\beta_j$ represents the second parameter, j is a positive integer greater than or equal to 0 and less than n, n represents the eighth parameter, and $\lfloor \cdot \rfloor$ represents rounding down.

In some implementations, the PDCCH detection capability corresponding to the first carrier may be determined based on the second parameter, the fourth parameter and the sixth parameter. Furthermore, the PDCCH detection capability corresponding to the first carrier may be determined based on a twelfth parameter. The twelfth parameter may be determined based on a product of the fourth parameter, the sixth parameter and the second parameter. That is to say, the twelfth parameter is determined based on the following formula: $\left\lfloor N \cdot C \cdot \beta_j \right\rfloor$. Herein, N represents the fourth parameter, C represents the sixth parameter, $\beta_j$ represents the second parameter, j is a positive integer greater than or equal to 0 and less than n, n represents the eighth parameter, and $\lfloor \cdot \rfloor$ represents rounding down.

In some implementations, the PDCCH detection capability corresponding to the first carrier is determined based on the third parameter and the twelfth parameter. Furthermore, the PDCCH detection capability corresponding to the first carrier is determined based on a minimum of the third parameter and the twelfth parameter.

In some implementations, the PDCCH detection capability corresponding to the first carrier may be determined based on the first parameter, the third parameter and the eleventh parameter. The third parameter may be determined based on the fourth parameter, the fifth parameter, the eighth parameter and the ninth parameter. Furthermore, the PDCCH detection capability corresponding to the first carrier may be determined based on a twelfth parameter. The twelfth parameter may be determined based on the fourth parameter, the fifth parameter, the tenth parameter and the fourteenth parameter. The tenth parameter is determined based on a quotient of the ninth parameter and the eighth parameter, and the fourteenth parameter is determined based on a quotient of the first parameter and the eleventh parameter. That is to say, the twelfth parameter is determined based on the following formula: $\left\lfloor N \cdot M \cdot \frac{k}{n} \cdot B_j^u \middle/ \sum_{i=0}^{k-1} B_i^u \right\rfloor$. Herein, N represents the fourth parameter, M represents the fifth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u \middle/ \sum_{i=0}^{k-1} B_i^u$ represents the fourteenth parameter, both i and j are positive integers greater than or equal to 0 and less than k, u represents the carrier attribute, $\Sigma$ represents summation, and $\lfloor \cdot \rfloor$ represents rounding down.

In some implementations, the PDCCH detection capability corresponding to the first carrier may be determined based on the first parameter, the third parameter and the eleventh parameter. The third parameter may be determined based on the fourth parameter, the sixth parameter, the eighth parameter and the ninth parameter. Furthermore, the PDCCH detection capability corresponding to the first carrier may be determined based on a twelfth parameter. The twelfth parameter may be determined based on the fourth parameter, the sixth parameter, the tenth parameter and the fourteenth parameter. The tenth parameter is determined based on a quotient of the ninth parameter and the eighth parameter, and the fourteenth parameter is determined based on a quotient of the first parameter and the eleventh parameter. That is to say, the twelfth parameter is determined based on the following formula: $\left\lfloor N \cdot C \cdot \frac{k}{n} \cdot B_j^u \middle/ \sum_{i=0}^{k-1} B_i^u \right\rfloor$. Herein, N represents the fourth parameter, C represents the sixth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u \middle/ \sum_{i=0}^{k-1} B_i^u$ represents the fourteenth parameter, both i and j are positive integers greater than or equal to 0 and less than k, u represents the carrier attribute, $\Sigma$ represents summation, and $\lfloor \cdot \rfloor$ represents rounding down.

In some implementations, the PDCCH detection capability corresponding to the first carrier may be determined based on the second parameter and the third parameter. The third parameter may be determined based on the fourth parameter, the fifth parameter, the eighth parameter and the ninth parameter. Furthermore, the PDCCH detection capability corresponding to the first carrier may be determined based on a twelfth parameter. The twelfth parameter may be determined based on a product of the fourth parameter, the fifth parameter, the second parameter and the tenth parameter. The tenth parameter is determined based on a quotient of the ninth parameter and the eighth parameter. That is to say, the twelfth parameter is determined based on the following formula: $\left\lfloor N \cdot M \cdot \frac{k}{n} \cdot \beta_j \right\rfloor$. Herein, N represents the fourth parameter, M represents the fifth parameter, n represents the eighth parameter, k represents the ninth parameter, $\frac{k}{n}$ represents the tenth parameter, $\beta_j$ represents the second parameter, j is a positive integer greater than or equal to 0 and less than k, and $\lfloor \cdot \rfloor$ represents rounding down.

In some implementations, the PDCCH detection capability corresponding to the first carrier may be determined based on the second parameter and the third parameter. The third parameter may be determined based on the fourth parameter, the sixth parameter, the eighth parameter and the ninth parameter. Furthermore, the PDCCH detection capability corresponding to the first carrier may be determined based on a twelfth parameter. The twelfth parameter may be determined based on a product of the fourth parameter, the sixth parameter, the second parameter and the tenth parameter. The tenth parameter is determined based on a quotient of the ninth parameter and the eighth parameter. That is to say, the twelfth parameter is determined based on the following formula: $\left\lfloor N \cdot C \cdot \frac{k}{n} \cdot \beta_j \right\rfloor$. Herein, N represents the fourth parameter, C represents the sixth parameter, n represents the eighth parameter, k represents the ninth parameter, $\frac{k}{n}$ represents the tenth parameter, $\beta_j$ represents the second parameter, j is a positive integer greater than or equal to 0 and less than k, and $\lfloor \cdot \rfloor$ represents rounding down.

In some implementations, the PDCCH detection capability corresponding to the first carrier is determined based on only the third parameter.

In some implementations, the PDCCH detection capability corresponding to the first carrier may be determined based on the first parameter, the second parameter, the fourth parameter, the fifth parameter and the seventh parameter. Furthermore, the PDCCH detection capability corresponding to the first carrier may be determined based on a twelfth parameter. The twelfth parameter may be determined based on a product of the fourth parameter, the fifth parameter, the thirteenth parameter and the second parameter. The thirteenth parameter is determined based on a quotient of the first parameter and the seventh parameter. That is to say, the twelfth parameter is determined based on the following formula:

$$\left\lfloor N \cdot M \cdot B_j / \sum_{i=0}^{n-1} B_i \cdot \beta_j \right\rfloor$$ . Herein, N represents the fourth parameter, M represents the fifth parameter, $\sum_{i=0}^{n-1} B_i$

represents the seventh parameter, $B_j$ represents the first parameter, $B_j / \sum_{i=0}^{n-1} B_i$ represents the thirteenth parameter, $\beta_j$ represents the second parameter, both i and j are positive integers greater than or equal to 0 and less than n, n represents

the eighth parameter, $\Sigma$ represents summation, and $\lfloor \cdot \rfloor$ represents rounding down.

In some implementations, the PDCCH detection capability corresponding to the first carrier may be determined based on the first parameter, the second parameter, the fourth parameter, the sixth parameter, and the seventh parameter. Furthermore, the PDCCH detection capability corresponding to the first carrier may be determined based on a twelfth parameter. The twelfth parameter may be determined based on a product of the fourth parameter, the sixth parameter, the thirteenth parameter and the second parameter. The thirteenth parameter is determined based on a quotient of the first parameter and the seventh parameter. That is to say, the twelfth parameter is determined based on the following formula:

$$\left\lfloor N \cdot C \cdot B_j / \sum_{i=0}^{n-1} B_i \right\rfloor$$ . Herein, N represents the fourth parameter, C represents the sixth parameter, $\sum_{i=0}^{n-1} B_i$

represents the seventh parameter, $B_j$ represents the first parameter, $B_j$ represents the thirteenth parameter, $\beta_j$ represents the second parameter, both i and j are positive integers greater than or equal to 0 and less than n, n represents the eighth

parameter, $\Sigma$ represents summation, and $\lfloor \cdot \rfloor$ represents rounding down.

In some implementations, the carrier attribute includes one or more of the following: a subcarrier spacing; a type of the PDCCH detection. The type of the PDCCH detection includes: detection in units of slots, or detection in units of spans.

In some implementations, the second parameter is determined based on configuration information of the network device.

In some implementations, the determining module 510 is further configured to determine a corresponding PDCCH detection capability when a terminal device performs detection on a first carrier among multiple carriers in a PDCCH enhancement scenario. The PDCCH enhancement scenario may be span-based PDCCH enhancement or PDCCH enhancement in a multi-TRP scenario.

In some implementations, the network device further includes a sending module 520. The sending module 520 is configured to send a PDCCH to the terminal device, where a resource occupied by the PDCCH is located within an alternative resource or conforms to an alternative format.

FIG. 6 is a schematic structural diagram of a device of an embodiment of the present disclosure. The dashed line in FIG. 6 indicates that the unit or module is optional. The device 600 may be used to implement the method described in the aforementioned method embodiments. The device 600 may be a chip, a terminal device, or a network device.

The device 600 may include one or more processors 610. The processor 610 may implement the functions of the determining module 410 shown in FIG. 4 or the determining module 510 shown in FIG. 5, that is, the processor 610 may support the device 600 to implement the methods described in the aforementioned method embodiments. The processor 2310 may be a general-purpose processor or a special-purpose processor. For example, the processor may be a Central Processing Unit (CPU). Alternatively, the processor may also be another general-purpose processor, a Digital Signal Processor (DSP), an Application Specific Integrated Circuit (ASIC), a Field Programmable Gate Array (FPGA) or another programmable logic device, a discrete gate or transistor logic device, a discrete hardware component, or the like. The general-purpose processor may be a microprocessor or the processor may be any conventional processor or the like.

The device 600 may also include one or more memories 620. The memory 620 has stored a program that is executable by the processor 610 to cause the processor 610 to perform each of the methods described in the aforementioned method embodiments. The memory 620 may be independent of the processor 610 or may be integrated in the processor 610.

The device 600 may also include a transceiver 630. The processor 610 may communicate with other devices or chips through the transceiver 630. For example, through the transceiver 630, the processor 610 may implement the functions of the receiving module 410 shown in FIG. 4 or the sending module 510 shown in FIG. 5.

An embodiment of the present disclosure further provides a computer-readable storage medium configured to store a program. The computer-readable storage medium may be applied to the terminal device or the network device in the embodiments of the present disclosure, and the computer program causes a computer to perform the method performed by the terminal device or the network device in various embodiments of the present disclosure.

An embodiment of the present disclosure further provides a computer program product, which includes a computer program. The computer program product may be applied to the terminal device or the network device in the embodiments of the present disclosure, and the computer program causes a computer to perform the method performed by the terminal device or the network device in various embodiments of the present disclosure.

An embodiment of the present disclosure further provides a computer program. The computer program may be applied to the terminal or the network device in the embodiments of the present disclosure, and the computer program causes a computer to perform the method performed by the terminal device or the network device in various embodiments of the present disclosure.

It is to be understood that the terms "system" and "network" are often used interchangeably herein. In addition, the terms used in the embodiments of the present disclosure are used only for explanation of specific embodiments of the present disclosure, and the terms are not intended to limit the present disclosure. The terms "first", "second", "third", "fourth" and the like in the description and claims of the present disclosure and the accompanying drawings are used to distinguish different objects and are not used to describe a particular sequence. Furthermore, the terms "including" and "having" and any variations thereof are intended to cover non-exclusive inclusion.

The "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

In the embodiments of the present disclosure, the expression "B corresponding to A" means that B is associated with A, and B may be determined based on A. However, it is also to be understood that determining B based on A does not mean that B is determined based on A alone, but that B may also be determined based on A and/or other information.

In the description of the embodiments of the present disclosure, the term "correspond" may mean that there is a direct correspondence or an indirect correspondence between the two, may also mean that there is an association relationship between the two, and may also be a relationship between indication and being indicated, configuration and being configured, etc.

In the embodiments of the present disclosure, the "protocol" may be a standard protocol in the communication field. For example, the protocol may include an LTE protocol, an NR protocol, and related protocols applied in future communication systems, which are not limited in the present disclosure.

In the embodiments of the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or".

In various embodiments of the present disclosure, the sequence number(s) of the above processes do not imply the sequence(s) of execution, and the sequence of execution of each process should be determined according to the functions and internal logic thereof, and should not constitute any limitation on the implementation process of the embodiments of the present disclosure.

In the several embodiments provided in the present disclosure, it is to be understood that the disclosed system, devices, and method may be implemented in other modes. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

The aforementioned embodiments may be implemented in whole or in part by software, hardware, firmware or any combination thereof. When implemented in software, the aforementioned embodiments may be implemented in whole or in part in the form of a computer program product. The computer program product includes one or more computer instructions. When the computer program instructions are loaded and executed on a computer, the flows or functions may be generated in whole or in part according to the embodiments of the present disclosure. The computer may be a general-

**EP 4 787 991 A1**

purpose computer, a dedicated computer, a computer network, or other programmable devices. The computer instructions may be stored in a computer-readable storage medium or transmitted from one computer-readable storage medium to another computer-readable storage medium. For example, the computer instructions may be transmitted from one Web site, computer, server, or data center to another Web site, computer, server, or data center in a wired (e.g., coaxial cable, optical fiber, Digital Subscriber Line (DSL)) manner or a wireless (e.g., infrared, wireless, microwave, etc.) manner. The computer-readable storage medium may be any available medium that a computer may access or may be a data storage device such as a server, a data center, or the like that is integrated with one or more available media. The available medium may be a magnetic medium (e.g., floppy disk, hard disk, magnetic tape), an optical medium (e.g., Digital Video Disc (DVD)), or a semiconductor medium (e.g., Solid State Disk (SSD)), etc.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

**Claims**

1. A method for channel detection, comprising:
   determining, by a terminal device, a Physical Downlink Control Channel (PDCCH) detection capability corresponding to a first carrier among a plurality of carriers according to one or more of following parameters:

   a first parameter, for indicating a size of a bandwidth of the first carrier;
   a second parameter, for indicating an allocation coefficient of the PDCCH detection capability corresponding to the first carrier; and
   a third parameter, for indicating a total PDCCH detection capability corresponding to target carrier(s) among the plurality of carriers, wherein the target carrier has a same carrier attribute as the first carrier.

2. The method of claim 1, wherein the third parameter is determined based on one or more of:

   a fourth parameter, for indicating a maximum number of carriers for PDCCH detection;
   a fifth parameter, for indicating a maximum number of times of PDCCH detections performed on a single carrier;
   a sixth parameter, for indicating a maximum number of non-overlapped Control Channel Elements (CCEs) for channel estimation on a single carrier;
   an eighth parameter, for indicating a number of the plurality of carriers; and
   a ninth parameter, for indicating a number of the target carrier(s) among the plurality of carriers.

3. The method of claim 2, wherein the third parameter is determined based on the fourth parameter, the fifth parameter and a tenth parameter, the tenth parameter being determined based on a quotient of the ninth parameter and the eighth parameter.

4. The method of claim 3, wherein the third parameter is determined based on a following formula:

$$\lfloor N \cdot M \cdot k/n \rfloor,$$

wherein N represents the fourth parameter, M represents the fifth parameter, n represents the eighth parameter, k represents the ninth parameter, $\dfrac{k}{n}$ represents the tenth parameter, and $\lfloor \cdot \rfloor$ represents rounding down.

5. The method of claim 2, wherein the third parameter is determined based on the fourth parameter, the sixth parameter and a tenth parameter, the tenth parameter being determined based on a quotient of the ninth parameter and the eighth parameter.

6. The method of claim 5, wherein the third parameter is determined based on a following formula:

$$\lfloor N \cdot C \cdot k/n \rfloor,$$

33

wherein N represents the fourth parameter, C represents the sixth parameter, n represents the eighth parameter, k represents the ninth parameter, $\frac{k}{n}$ represents the tenth parameter, and $\lfloor \cdot \rfloor$ represents rounding down.

7. The method of any one of claims 1 to 6, wherein the PDCCH detection capability corresponding to the first carrier is further determined based on one or more of:

> a fourth parameter, for indicating a maximum number of carriers for PDCCH detection;
> a fifth parameter, for indicating a maximum number of times of PDCCH detections performed on a single carrier;
> a sixth parameter, for indicating a maximum number of non-overlapped CCEs for channel estimation on a single carrier;
> a seventh parameter, for indicating a total bandwidth of the plurality of carriers;
> an eighth parameter, for indicating a number of the plurality of carriers; and
> a ninth parameter, for indicating a number of the target carrier(s) among the plurality of carriers;
> an eleventh parameter, for indicating a total bandwidth of the target carrier(s).

8. The method of claim 7, wherein the PDCCH detection capability corresponding to the first carrier is determined based on a twelfth parameter, the twelfth parameter being determined based on a product of the fourth parameter, the fifth parameter and a thirteenth parameter, wherein the thirteenth parameter is determined based on a quotient of the first parameter and the seventh parameter.

9. The method of claim 8, wherein the twelfth parameter is determined based on a following formula:

$$\left\lfloor N \cdot M \cdot B_j / \sum_{i=0}^{n-1} B_i \right\rfloor,$$

wherein N represents the fourth parameter, M represents the fifth parameter, $\sum_{i=0}^{n-1} B_i$ represents the seventh parameter, $B_j$ represents the first parameter, $B_j / \sum_{i=0}^{n-1} B_i$ represents the thirteenth parameter, both i and j are positive integers greater than or equal to 0 and less than n, n represents the eighth parameter, $\Sigma$ represents summation, and $\lfloor \cdot \rfloor$ represents rounding down.

10. The method of claim 7, wherein the PDCCH detection capability corresponding to the first carrier is determined based on a twelfth parameter, the twelfth parameter being determined based on a product of the fourth parameter, the sixth parameter and a thirteenth parameter, wherein the thirteenth parameter is determined based on a quotient of the first parameter and the seventh parameter.

11. The method of claim 10, wherein the twelfth parameter is determined based on a following formula:

$$\left\lfloor N \cdot C \cdot B_j / \sum_{i=0}^{n-1} B_i \right\rfloor,$$

wherein N represents the fourth parameter, C represents the sixth parameter, $\sum_{i=0}^{n-1} B_i$ represents the seventh parameter, $B_j$ represents the first parameter, $B_j / \sum_{i=0}^{n-1} B_i$ represents the thirteenth parameter, both i and j are positive integers greater than or equal to 0 and less than n, n represents the eighth parameter, $\Sigma$ represents summation, and $\lfloor \cdot \rfloor$ represents rounding down.

12. The method of claim 7, wherein the PDCCH detection capability corresponding to the first carrier is determined based on a twelfth parameter, the twelfth parameter being determined based on a product of the fourth parameter, the fifth parameter and the second parameter.

13. The method of claim 12, wherein the twelfth parameter is determined based on a following formula:

$$\left\lfloor N \cdot M \cdot \beta_j \right\rfloor,$$

wherein N represents the fourth parameter, M represents the fifth parameter, $\beta_j$ represents the second parameter, j is a positive integer greater than or equal to 0 and less than n, n represents the eighth parameter, and $\lfloor \cdot \rfloor$ represents rounding down.

14. The method of claim 7, wherein the PDCCH detection capability corresponding to the first carrier is determined based on a twelfth parameter, the twelfth parameter being determined based on a product of the fourth parameter, the sixth parameter and the second parameter.

15. The method of claim 14, wherein the twelfth parameter is determined based on a following formula:

$$\left\lfloor N \cdot C \cdot \beta_j \right\rfloor,$$

wherein N represents the fourth parameter, C represents the sixth parameter, $\beta_j$ represents the second parameter, j is a positive integer greater than or equal to 0 and less than n, n represents the eighth parameter, and $\lfloor \cdot \rfloor$ represents rounding down.

16. The method of any one of claims 8 to 15, wherein the PDCCH detection capability corresponding to the first carrier is determined based on the third parameter and the twelfth parameter.

17. The method of claim 16, wherein the PDCCH detection capability corresponding to the first carrier is determined is determined based on a minimum of the third parameter and the twelfth parameter.

18. The method of claim 7, wherein the PDCCH detection capability corresponding to the first carrier is determined based on a twelfth parameter, the twelfth parameter being determined based on the fourth parameter, the fifth parameter, a tenth parameter and a fourteenth parameter, wherein the tenth parameter is determined based on a quotient of the ninth parameter and the eighth parameter, and the fourteenth parameter is determined based on a quotient of the first parameter and the eleventh parameter.

19. The method of claim 18, wherein the twelfth parameter is determined based on a following formula:

$$\left\lfloor N \cdot M \cdot \frac{k}{n} \cdot B_j^u / \sum_{i=0}^{k-1} B_i^u \right\rfloor,$$

wherein N represents the fourth parameter, M represents the fifth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u / \sum_{i=0}^{k-1} B_i^u$ represents the fourteenth parameter, both i and j are positive integers greater than or equal to 0 and less than k, u represents the carrier attribute, $\Sigma$ represents summation, and $\lfloor \cdot \rfloor$ represents rounding down.

20. The method of claim 7, wherein the PDCCH detection capability corresponding to the first carrier is determined based on a twelfth parameter, the twelfth parameter being determined based on the fourth parameter, the sixth parameter, a tenth parameter and a fourteenth parameter, wherein the tenth parameter is determined based on a quotient of the ninth parameter and the eighth parameter, and the fourteenth parameter is determined based on a quotient of the first parameter and the eleventh parameter.

21. The method of claim 20, wherein the twelfth parameter is determined based on a following formula:

$$\left\lfloor N \cdot C \cdot \frac{k}{n} \cdot B_j^u / \sum_{i=0}^{k-1} B_i^u \right\rfloor,$$

wherein N represents the fourth parameter, C represents the sixth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u / \sum_{i=0}^{k-1} B_i^u$ represents the fourteenth parameter, both i and j are positive integers greater than or equal to 0 and less than k, u represents the carrier attribute, $\Sigma$ represents summation, and $\lfloor \cdot \rfloor$ represents rounding down.

22. The method of claim 7, wherein the PDCCH detection capability corresponding to the first carrier is determined based on a twelfth parameter, the twelfth parameter being determined based on a product of the fourth parameter, the fifth parameter, the second parameter and a tenth parameter; wherein the tenth parameter is determined based on a quotient of the ninth parameter and the eighth parameter.

23. The method of claim 22, wherein the twelfth parameter is determined based on a following formula:

$$\left\lfloor N \cdot M \cdot \frac{k}{n} \cdot \beta_j \right\rfloor,$$

wherein N represents the fourth parameter, M represents the fifth parameter, n represents the eighth parameter, k represents the ninth parameter, $\frac{k}{n}$ represents the tenth parameter, $\beta_j$ represents the second parameter, j is a positive integer greater than or equal to 0 and less than k, and $\lfloor \cdot \rfloor$ represents rounding down.

24. The method of claim 7, wherein the PDCCH detection capability corresponding to the first carrier is determined based on a twelfth parameter, the twelfth parameter being determined based on a product of the fourth parameter, the sixth parameter, the second parameter and a tenth parameter, wherein the tenth parameter is determined based on a quotient of the ninth parameter and the eighth parameter.

25. The method of claim 24, wherein the twelfth parameter is determined based on a following formula:

$$\left\lfloor N \cdot C \cdot \frac{k}{n} \cdot \beta_j \right\rfloor,$$

wherein N represents the fourth parameter, C represents the sixth parameter, n represents the eighth parameter, k represents the ninth parameter, $\frac{k}{n}$ represents the tenth parameter, $\beta_j$ represents the second parameter, j is a positive integer greater than or equal to 0 and less than k, and $\lfloor \cdot \rfloor$ represents rounding down.

26. The method of any one of claims 1 to 25, wherein the PDCCH detection capability corresponding to the first carrier is determined based on only the third parameter.

27. The method of any one of claims 1 to 26, wherein the carrier attribute comprises one or more of:

   a subcarrier spacing; and
   a type of the PDCCH detection,
   wherein the type of the PDCCH detection comprises: detection in units of slots, or detection in units of spans.

28. The method of any one of claims 1 to 27, wherein the second parameter is determined based on configuration information of a network device.

29. A method for channel detection, comprising:
   determining, by a network device, a corresponding Physical Downlink Control Channel (PDCCH) detection capability when a terminal device performs detection on a first carrier among a plurality of carriers, according to one or more of following parameters:

   a first parameter, for indicating a size of a bandwidth of the first carrier;

a second parameter, for indicating an allocation coefficient of the PDCCH detection capability corresponding to the first carrier; and

a third parameter, for indicating a total PDCCH detection capability corresponding to target carrier(s) among the plurality of carriers, wherein the target carrier has a same carrier attribute as the first carrier.

30. The method of claim 29, wherein the third parameter is determined based on one or more of:

a fourth parameter, for indicating a maximum number of carriers for PDCCH detection;

a fifth parameter, for indicating a maximum number of times of PDCCH detections performed on a single carrier;

a sixth parameter, for indicating a maximum number of non-overlapped Control Channel Elements (CCEs) for channel estimation on a single carrier;

an eighth parameter, for indicating a number of the plurality of carriers; and

a ninth parameter, for indicating a number of the target carrier(s) among the plurality of carriers.

31. The method of claim 30, wherein the third parameter is determined based on the fourth parameter, the fifth parameter and a tenth parameter, the tenth parameter being determined based on a quotient of the ninth parameter and the eighth parameter.

32. The method of claim 31, wherein the third parameter is determined based on a following formula:

$$\lfloor N \cdot M \cdot k/n \rfloor,$$

wherein N represents the fourth parameter, M represents the fifth parameter, n represents the eighth parameter, k represents the ninth parameter, $\dfrac{k}{n}$ represents the tenth parameter, and $\lfloor \cdot \rfloor$ represents rounding down.

33. The method of claim 30, wherein the third parameter is determined based on the fourth parameter, the sixth parameter and a tenth parameter, the tenth parameter being determined based on a quotient of the ninth parameter and the eighth parameter.

34. The method of claim 33, wherein the third parameter is determined based on a following formula:

$$\lfloor N \cdot C \cdot k/n \rfloor,$$

wherein N represents the fourth parameter, C represents the sixth parameter, n represents the eighth parameter, k represents the ninth parameter, $\dfrac{k}{n}$ represents the tenth parameter, and $\lfloor \cdot \rfloor$ represents rounding down.

35. The method of any one of claims 29 to 34, wherein the PDCCH detection capability corresponding to the first carrier is further determined based on one or more of:

a fourth parameter, for indicating a maximum number of carriers for PDCCH detection;

a fifth parameter, for indicating a maximum number of times of PDCCH detections performed on a single carrier;

a sixth parameter, for indicating a maximum number of non-overlapped CCEs for channel estimation on a single carrier;

a seventh parameter, for indicating a total bandwidth of the plurality of carriers;

an eighth parameter, for indicating a number of the plurality of carriers; and

a ninth parameter, for indicating a number of the target carrier(s) among the plurality of carriers;

an eleventh parameter, for indicating a total bandwidth of the target carrier(s).

36. The method of claim 35, wherein the PDCCH detection capability corresponding to the first carrier is determined based on a twelfth parameter, the twelfth parameter being determined based on a product of the fourth parameter, the fifth parameter and a thirteenth parameter; wherein the thirteenth parameter is determined based on a quotient of the first parameter and the seventh parameter.

37. The method of claim 36, wherein the twelfth parameter is determined based on a following formula:

$$\left\lfloor N \cdot M \cdot B_j / \sum_{i=0}^{n-1} B_i \right\rfloor,$$

wherein N represents the fourth parameter, M represents the fifth parameter, $\sum_{i=0}^{n-1} B_i$ represents the seventh parameter, $B_j$ represents the first parameter, and $B_j / \sum_{i=0}^{n-1} B_i$ represents the thirteenth parameter, both i and j are positive integers greater than or equal to 0 and less than n, n represents the eighth parameter, $\Sigma$ represents summation, and $\lfloor \cdot \rfloor$ represents rounding down.

38. The method of claim 35, wherein the PDCCH detection capability corresponding to the first carrier is determined based on a twelfth parameter, the twelfth parameter being determined based on a product of the fourth parameter, the sixth parameter and a thirteenth parameter, wherein the thirteenth parameter is determined based on a quotient of the first parameter and the seventh parameter.

39. The method of claim 38, wherein the twelfth parameter is determined based on a following formula:

$$\left\lfloor N \cdot C \cdot B_j / \sum_{i=0}^{n-1} B_i \right\rfloor,$$

wherein N represents the fourth parameter, C represents the sixth parameter, $\sum_{i=0}^{n-1} B_i$ represents the seventh parameter, $B_j$ represents the first parameter, and $B_j / \sum_{i=0}^{n-1} B_i$ represents the thirteenth parameter, both i and j are positive integers greater than or equal to 0 and less than n, n represents the eighth parameter, $\Sigma$ represents summation, and $\lfloor \cdot \rfloor$ represents rounding down.

40. The method of claim 35, wherein the PDCCH detection capability corresponding to the first carrier is determined based on a twelfth parameter, the twelfth parameter being determined based on a product of the fourth parameter, the fifth parameter and the second parameter.

41. The method of claim 40, wherein the twelfth parameter is determined based on a following formula:

$$\left\lfloor N \cdot M \cdot \beta_j \right\rfloor,$$

wherein N represents the fourth parameter, M represents the fifth parameter, $\beta_j$ represents the second parameter, j is a positive integer greater than or equal to 0 and less than n, n represents the eighth parameter, and $\lfloor \cdot \rfloor$ represents rounding down.

42. The method of claim 35, wherein the PDCCH detection capability corresponding to the first carrier is determined based on a twelfth parameter, the twelfth parameter being determined based on a product of the fourth parameter, the sixth parameter and the second parameter.

43. The method of claim 42, wherein the twelfth parameter is determined based on a following formula:

$$\left\lfloor N \cdot C \cdot \beta_j \right\rfloor,$$

wherein N represents the fourth parameter, C represents the sixth parameter, $\beta_j$ represents the second parameter, j is a positive integer greater than or equal to 0 and less than n, n represents the eighth parameter, and $\lfloor \cdot \rfloor$ represents rounding down.

44. The method of any one of claims 36 to 43, wherein the PDCCH detection capability corresponding to the first carrier is determined based on the third parameter and the twelfth parameter.

45. The method of claim 44, wherein the PDCCH detection capability corresponding to the first carrier is determined is determined based on a minimum of the third parameter and the twelfth parameter.

46. The method of claim 35, wherein the PDCCH detection capability corresponding to the first carrier is determined based on a twelfth parameter, the twelfth parameter being determined based on the fourth parameter, the fifth parameter, a tenth parameter and a fourteenth parameter, wherein the tenth parameter is determined based on a quotient of the ninth parameter and the eighth parameter, and the fourteenth parameter is determined based on a quotient of the first parameter and the eleventh parameter.

47. The method of claim 46, wherein the twelfth parameter is determined based on a following formula:

$$\left\lfloor N \cdot M \cdot \frac{k}{n} \cdot B_j^u \Big/ \sum_{i=0}^{k-1} B_i^u \right\rfloor,$$

wherein N represents the fourth parameter, M represents the fifth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u \big/ \sum_{i=0}^{k-1} B_i^u$ represents the fourteenth parameter, both i and j are positive integers greater than or equal to 0 and less than k, u represents the carrier attribute, $\Sigma$ represents summation, and $\lfloor \cdot \rfloor$ represents rounding down.

48. The method of claim 35, wherein the PDCCH detection capability corresponding to the first carrier is determined based on a twelfth parameter, the twelfth parameter being determined based on the fourth parameter, the sixth parameter, a tenth parameter and a fourteenth parameter, wherein the tenth parameter is determined based on a quotient of the ninth parameter and the eighth parameter, and the fourteenth parameter is determined based on a quotient of the first parameter and the eleventh parameter.

49. The method of claim 48, wherein the twelfth parameter is determined based on a following formula:

$$\left\lfloor N \cdot C \cdot \frac{k}{n} \cdot B_j^u \Big/ \sum_{i=0}^{k-1} B_i^u \right\rfloor,$$

wherein N represents the fourth parameter, C represents the sixth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u \big/ \sum_{i=0}^{k-1} B_i^u$ represents the fourteenth parameter, both i and j are positive integers greater than or equal to 0 and less than k, u represents the carrier attribute, $\Sigma$ represents summation, and $\lfloor \cdot \rfloor$ represents rounding down.

50. The method of claim 35, wherein the PDCCH detection capability corresponding to the first carrier is determined based on a twelfth parameter, the twelfth parameter being determined based on a product of the fourth parameter, the fifth parameter, the second parameter and a tenth parameter, wherein the tenth parameter is determined based on a quotient of the ninth parameter and the eighth parameter.

51. The method of claim 50, wherein the twelfth parameter is determined based on a following formula:

$$\left\lfloor N \cdot M \cdot \frac{k}{n} \cdot \beta_j \right\rfloor,$$

wherein N represents the fourth parameter, M represents the fifth parameter, n represents the eighth parameter, k represents the ninth parameter, $\frac{k}{n}$ represents the tenth parameter, $\beta_j$ represents the second parameter, j is a positive integer greater than or equal to 0 and less than k, and $\lfloor \cdot \rfloor$ represents rounding down.

52. The method of claim 35, wherein the PDCCH detection capability corresponding to the first carrier is determined based on a twelfth parameter, the twelfth parameter being determined based on a product of the fourth parameter, the sixth parameter, the second parameter and a tenth parameter wherein the tenth parameter is determined based on a quotient of the ninth parameter and the eighth parameter.

53. The method of claim 52, wherein the twelfth parameter is determined based on a following formula:

$$\left\lfloor N \cdot C \cdot \frac{k}{n} \cdot \beta_j \right\rfloor,$$

wherein N represents the fourth parameter, C represents the sixth parameter, n represents the eighth parameter, k represents the ninth parameter, $\frac{k}{n}$ represents the tenth parameter, $\beta_j$ represents the second parameter, j is a positive integer greater than or equal to 0 and less than k, and $\lfloor \cdot \rfloor$ represents rounding down.

54. The method of any one of claims 29 to 53, wherein the PDCCH detection capability corresponding to the first carrier is determined based on only the third parameter.

55. The method of any one of claims 29 to 54, wherein the carrier attribute comprises one or more of:

a subcarrier spacing; and
a type of the PDCCH detection;
wherein the type of the PDCCH detection comprises: detection in units of slots or detection in units of spans.

56. The method of any one of claims 29 to 55, wherein the second parameter is determined based on configuration information of a network device.

57. A terminal device, comprising:
a determining module, configured to determine a Physical Downlink Control Channel (PDCCH) detection capability corresponding to a first carrier among a plurality of carriers, according to one or more of following parameters:

a first parameter, for indicating a size of a bandwidth of the first carrier;
a second parameter, for indicating an allocation coefficient of the PDCCH detection capability corresponding to the first carrier; and
a third parameter, for indicating a total PDCCH detection capability corresponding to target carrier(s) among the plurality of carriers, wherein the target carrier has a same carrier attribute as the first carrier.

58. The terminal device of claim 57, wherein the third parameter is determined based on one or more of:

a fourth parameter, for indicating a maximum number of carriers for PDCCH detection;
a fifth parameter, for indicating a maximum number of times of PDCCH detections performed on a single carrier;
a sixth parameter, for indicating a maximum number of non-overlapped Control Channel Elements (CCEs) for channel estimation on a single carrier;
an eighth parameter, for indicating a number of the plurality of carriers; and
a ninth parameter, for indicating a number of the target carrier(s) among the plurality of carriers.

59. The terminal device of claim 58, wherein the third parameter is determined based on the fourth parameter, the fifth parameter and a tenth parameter, the tenth parameter being determined based on a quotient of the ninth parameter and the eighth parameter.

60. The terminal device of claim 59, wherein the third parameter is determined based on a following formula:

$$\lfloor N \cdot M \cdot k/n \rfloor,$$

wherein N represents the fourth parameter, M represents the fifth parameter, n represents the eighth parameter, k represents the ninth parameter, $\frac{k}{n}$ represents the tenth parameter, and $\lfloor \cdot \rfloor$ represents rounding down.

61. The terminal device of claim 58, wherein the third parameter is determined based on the fourth parameter, the sixth parameter and a tenth parameter, the tenth parameter being determined based on a quotient of the ninth parameter and the eighth parameter.

62. The terminal device of claim 61, wherein the third parameter is determined based on a following formula:

$$\lfloor N \cdot C \cdot k/n \rfloor,$$

wherein N represents the fourth parameter, C represents the sixth parameter, n represents the eighth parameter, k represents the ninth parameter, $\frac{k}{n}$ represents the tenth parameter, and $\lfloor \cdot \rfloor$ represents rounding down.

63. The terminal device of any one of claims 57 to 62, wherein the PDCCH detection capability corresponding to the first carrier is further determined based on one or more of:

a fourth parameter, for indicating a maximum number of carriers for PDCCH detection;
a fifth parameter, for indicating a maximum number of times of PDCCH detections performed on a single carrier;
a sixth parameter, for indicating a maximum number of non-overlapped CCEs for channel estimation on a single carrier;
a seventh parameter, for indicating a total bandwidth of the plurality of carriers;
an eighth parameter, for indicating a number of the plurality of carriers; and
a ninth parameter, for indicating a number of the target carrier(s) among the plurality of carriers;
an eleventh parameter, for indicating a total bandwidth of the target carrier(s).

64. The terminal device of claim 63, wherein the PDCCH detection capability corresponding to the first carrier is determined based on a twelfth parameter, the twelfth parameter being determined based on a product of the fourth parameter, the fifth parameter and a thirteenth parameter, wherein the thirteenth parameter is determined based on a quotient of the first parameter and the seventh parameter.

65. The terminal device of claim 64, wherein the twelfth parameter is determined based on a following formula:

$$\lfloor N \cdot M \cdot B_j / \sum_{i=0}^{n-1} B_i \rfloor,$$

wherein N represents the fourth parameter, M represents the fifth parameter, $\sum_{i=0}^{n-1} B_i$ represents the seventh parameter, $B_j$ represents the first parameter, and $B_j$ represents the thirteenth parameter, both i and j are positive integers greater than or equal to 0 and less than n, n represents the eighth parameter, $\Sigma$ represents summation, and $\lfloor \cdot \rfloor$ represents rounding down.

66. The terminal device of claim 63, wherein the PDCCH detection capability corresponding to the first carrier is determined based on a twelfth parameter, the twelfth parameter being determined based on a product of the fourth parameter, the sixth parameter and a thirteenth parameter, wherein the thirteenth parameter is determined based on a quotient of the first parameter and the seventh parameter.

67. The terminal device of claim 66, wherein the twelfth parameter is determined based on a following formula:

$$\lfloor N \cdot C \cdot B_j / \sum_{i=0}^{n-1} B_i \rfloor,$$

wherein N represents the fourth parameter, C represents the sixth parameter, $\sum_{i=0}^{n-1} B_i$ represents the seventh parameter, $B_j$ represents the first parameter, and $B_j / \sum_{i=0}^{n-1} B_i$ represents the thirteenth parameter, both i and j are positive integers greater than or equal to 0 and less than n, n represents the eighth parameter, $\Sigma$ represents summation, and $\lfloor \cdot \rfloor$ represents rounding down.

**68.** The terminal device of claim 63, wherein the PDCCH detection capability corresponding to the first carrier is determined based on a twelfth parameter, the twelfth parameter being determined based on a product of the fourth parameter, the fifth parameter and the second parameter.

**69.** The terminal device of claim 68, wherein the twelfth parameter is determined based on a following formula:

$$\lfloor N \cdot M \cdot \beta_j \rfloor,$$

wherein N represents the fourth parameter, M represents the fifth parameter, $\beta_j$ represents the second parameter, j is a positive integer greater than or equal to 0 and less than n, n represents the eighth parameter, and $\lfloor \cdot \rfloor$ represents rounding down.

**70.** The terminal device of claim 63, wherein the PDCCH detection capability corresponding to the first carrier is determined based on a twelfth parameter, the twelfth parameter being determined based on a product of the fourth parameter, the sixth parameter and the second parameter.

**71.** The terminal device of claim 70, wherein the twelfth parameter is determined based on a following formula:

$$\lfloor N \cdot C \cdot \beta_j \rfloor,$$

wherein N represents the fourth parameter, C represents the sixth parameter, $\beta_j$ represents the second parameter, j is a positive integer greater than or equal to 0 and less than n, n represents the eighth parameter, and $\lfloor \cdot \rfloor$ represents rounding down.

**72.** The terminal device of any one of claims 64 to 71, wherein the PDCCH detection capability corresponding to the first carrier is determined based on the third parameter and the twelfth parameter.

**73.** The terminal device of claim 72, wherein the PDCCH detection capability corresponding to the first carrier is determined is determined based on a minimum of the third parameter and the twelfth parameter.

**74.** The terminal device of claim 63, wherein the PDCCH detection capability corresponding to the first carrier is determined based on a twelfth parameter, the twelfth parameter being determined based on the fourth parameter, the fifth parameter, a tenth parameter and a fourteenth parameter, wherein the tenth parameter is determined based on a quotient of the ninth parameter and the eighth parameter, and the fourteenth parameter is determined based on a quotient of the first parameter and the eleventh parameter.

**75.** The terminal device of claim 74, wherein the twelfth parameter is determined based on a following formula:

$$\left\lfloor N \cdot M \cdot \frac{k}{n} \cdot B_j^u \Big/ \sum_{i=0}^{k-1} B_i^u \right\rfloor,$$

wherein N represents the fourth parameter, M represents the fifth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u \Big/ \sum_{i=0}^{k-1} B_i^u$ represents the fourteenth parameter, both i and j are positive integers greater than or equal to 0 and less than k, u represents the carrier attribute, $\Sigma$ represents summation, and $\lfloor \cdot \rfloor$ represents rounding down.

**76.** The terminal device of claim 63, wherein the PDCCH detection capability corresponding to the first carrier is determined based on a twelfth parameter, the twelfth parameter being determined based on the fourth parameter, the sixth parameter, a tenth parameter and a fourteenth parameter, wherein the tenth parameter is determined based on a quotient of the ninth parameter and the eighth parameter, and the fourteenth parameter is determined based on a quotient of the first parameter and the eleventh parameter.

77. The terminal device of claim 76, wherein the twelfth parameter is determined based on a following formula:

$$\left\lfloor N \cdot C \cdot \frac{k}{n} \cdot B_j^u \Big/ \sum_{i=0}^{k-1} B_i^u \right\rfloor,$$

wherein N represents the fourth parameter, C represents the sixth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u \Big/ \sum_{i=0}^{k-1} B_i^u$ represents the fourteenth parameter, both i and j are positive integers greater than or equal to 0 and less than k, u represents the carrier attribute, $\Sigma$ represents summation, and $\lfloor \cdot \rfloor$ represents rounding down.

78. The terminal device of claim 63, wherein the PDCCH detection capability corresponding to the first carrier is determined based on a twelfth parameter, the twelfth parameter being determined based on a product of the fourth parameter, the fifth parameter, the second parameter and a tenth parameter, wherein the tenth parameter is determined based on a quotient of the ninth parameter and the eighth parameter.

79. The terminal device of claim 78, wherein the twelfth parameter is determined based on a following formula:

$$\left\lfloor N \cdot M \cdot \frac{k}{n} \cdot \beta_j \right\rfloor,$$

wherein N represents the fourth parameter, M represents the fifth parameter, n represents the eighth parameter, k represents the ninth parameter, $\frac{k}{n}$ represents the tenth parameter, $\beta_j$ represents the second parameter, j is a positive integer greater than or equal to 0 and less than k, and $\lfloor \cdot \rfloor$ represents rounding down.

80. The terminal device of claim 63, wherein the PDCCH detection capability corresponding to the first carrier is determined based on a twelfth parameter, the twelfth parameter being determined based on a product of the fourth parameter, the sixth parameter, the second parameter and a tenth parameter, wherein the tenth parameter is determined based on a quotient of the ninth parameter and the eighth parameter.

81. The terminal device of claim 80, wherein the twelfth parameter is determined based on a following formula:

$$\left\lfloor N \cdot C \cdot \frac{k}{n} \cdot \beta_j \right\rfloor,$$

wherein N represents the fourth parameter, C represents the sixth parameter, n represents the eighth parameter, k represents the ninth parameter, $\frac{k}{n}$ represents the tenth parameter, $\beta_j$ represents the second parameter, j is a positive integer greater than or equal to 0 and less than k, and $\lfloor \cdot \rfloor$ represents rounding down.

82. The terminal device of any one of claims 57 to 81, wherein the PDCCH detection capability corresponding to the first carrier is determined based on only the third parameter.

83. The terminal device of any one of claims 57 to 82, wherein the carrier attribute comprises one or more of:

   a subcarrier spacing; and

a type of the PDCCH detection;
wherein the type of the PDCCH detection comprises: detection in units of slots or detection in units of spans.

84. The terminal device of any one of claims 57 to 83, wherein the second parameter is determined based on configuration information of a network device.

85. A network device, comprising:
a determining module, configured to determine a corresponding Physical Downlink Control Channel (PDCCH) detection capability when a terminal device performs detection on a first carrier among a plurality of carriers, according to one or more of following parameters:

a first parameter, for indicating a size of a bandwidth of the first carrier;
a second parameter, for indicating an allocation coefficient of the PDCCH detection capability corresponding to the first carrier; and
a third parameter, for indicating a total PDCCH detection capability corresponding to target carrier(s) among the plurality of carriers, wherein the target carrier has a same carrier attribute as the first carrier.

86. The network device of claim 85, wherein the third parameter is determined based on one or more of:

a fourth parameter, for indicating a maximum number of carriers for PDCCH detection;
a fifth parameter, for indicating a maximum number of times of PDCCH detections performed on a single carrier;
a sixth parameter, for indicating a maximum number of non-overlapped Control Channel Elements (CCEs) for channel estimation on a single carrier;
an eighth parameter, for indicating a number of the plurality of carriers; and
a ninth parameter, for indicating a number of the target carrier(s) among the plurality of carriers.

87. The network device of claim 86, wherein the third parameter is determined based on the fourth parameter, the fifth parameter and a tenth parameter, the tenth parameter being determined based on a quotient of the ninth parameter and the eighth parameter.

88. The network device of claim 87, wherein the third parameter is determined based on a following formula:

$$\lfloor N \cdot M \cdot k/n \rfloor,$$

wherein N represents the fourth parameter, M represents the fifth parameter, n represents the eighth parameter, k represents the ninth parameter, $\dfrac{k}{n}$ represents the tenth parameter, and $\lfloor \cdot \rfloor$ represents rounding down.

89. The network device of claim 86, wherein the third parameter is determined based on the fourth parameter, the sixth parameter and a tenth parameter, the tenth parameter being determined based on a quotient of the ninth parameter and the eighth parameter.

90. The network device of claim 89, wherein the third parameter is determined based on a following formula:

$$\lfloor N \cdot C \cdot k/n \rfloor,$$

wherein N represents the fourth parameter, C represents the sixth parameter, n represents the eighth parameter, k represents the ninth parameter, $\dfrac{k}{n}$ represents the tenth parameter, and $\lfloor \cdot \rfloor$ represents rounding down.

91. The network device of any one of claims 85 to 90, wherein the PDCCH detection capability corresponding to the first carrier is further determined based on one or more of:

a fourth parameter, for indicating a maximum number of carriers for PDCCH detection;
a fifth parameter, for indicating a maximum number of times of PDCCH detections performed on a single carrier;
a sixth parameter, for indicating a maximum number of non-overlapped CCEs for channel estimation on a single carrier;
a seventh parameter, for indicating a total bandwidth of the plurality of carriers;
an eighth parameter, for indicating a number of the plurality of carriers; and
a ninth parameter, for indicating a number of the target carrier(s) among the plurality of carriers;
an eleventh parameter, for indicating a total bandwidth of the target carrier(s).

92. The network device of claim 91, wherein the PDCCH detection capability corresponding to the first carrier is determined based on a twelfth parameter, the twelfth parameter being determined based on a product of the fourth parameter, the fifth parameter and a thirteenth parameter, wherein the thirteenth parameter is determined based on a quotient of the first parameter and the seventh parameter.

93. The network device of claim 92, wherein the twelfth parameter is determined based on a following formula:

$$\left\lfloor N \cdot M \cdot B_j / \sum_{i=0}^{n-1} B_i \right\rfloor,$$

wherein N represents the fourth parameter, M represents the fifth parameter, $\sum_{i=0}^{n-1} B_i$ represents the seventh parameter, $B_j$ represents the first parameter, $B_j / \sum_{i=0}^{n-1} B_i$ represents the thirteenth parameter, both i and j are positive integers greater than or equal to 0 and less than n, n represents the eighth parameter, $\Sigma$ represents summation, and $\lfloor \cdot \rfloor$ represents rounding down.

94. The network device of claim 91, wherein the PDCCH detection capability corresponding to the first carrier is determined based on a twelfth parameter, the twelfth parameter being determined based on a product of the fourth parameter, the sixth parameter and a thirteenth parameter, wherein the thirteenth parameter is determined based on a quotient of the first parameter and the seventh parameter.

95. The network device of claim 94, wherein the twelfth parameter is determined based on a following formula:

$$\left\lfloor N \cdot C \cdot B_j / \sum_{i=0}^{n-1} B_i \right\rfloor,$$

wherein N represents the fourth parameter, C represents the sixth parameter, $\sum_{i=0}^{n-1} B_i$ represents the seventh parameter, $B_j$ represents the first parameter, and $B_j / \sum_{i=0}^{n-1} B_i$ represents the thirteenth parameter, both i and j are positive integers greater than or equal to 0 and less than n, n represents the eighth parameter, $\Sigma$ represents summation, and $\lfloor \cdot \rfloor$ represents rounding down.

96. The network device of claim 91, wherein the PDCCH detection capability corresponding to the first carrier is determined based on a twelfth parameter, the twelfth parameter being determined based on a product of the fourth parameter, the fifth parameter and the second parameter.

97. The network device of claim 96, wherein the twelfth parameter is determined based on a following formula:

$$\left\lfloor N \cdot M \cdot \beta_j \right\rfloor,$$

wherein N represents the fourth parameter, M represents the fifth parameter, $\beta_j$ represents the second parameter, j is a positive integer greater than or equal to 0 and less than n, n represents the eighth parameter, and $\lfloor \cdot \rfloor$ represents rounding down.

98. The network device of claim 91, wherein the PDCCH detection capability corresponding to the first carrier is determined based on a twelfth parameter, the twelfth parameter being determined based on a product of the fourth parameter, the sixth parameter and the second parameter.

99. The network device of claim 98, wherein the twelfth parameter is determined based on a following formula:

$$\lfloor N \cdot C \cdot \beta_j \rfloor,$$

wherein N represents the fourth parameter, C represents the sixth parameter, $\beta_j$ represents the second parameter, j is a positive integer greater than or equal to 0 and less than n, n represents the eighth parameter, and $\lfloor \cdot \rfloor$ represents rounding down.

**100.**
The network device of any one of claims 92 to 99, wherein the PDCCH detection capability corresponding to the first carrier is determined based on the third parameter and the twelfth parameter.

**101.**
The network device of claim 100, wherein the PDCCH detection capability corresponding to the first carrier is determined is determined based on a minimum of the third parameter and the twelfth parameter.

**102.**
The network device of claim 91, wherein the PDCCH detection capability corresponding to the first carrier is determined based on a twelfth parameter, the twelfth parameter being determined based on the fourth parameter, the fifth parameter, a tenth parameter and a fourteenth parameter, wherein the tenth parameter is determined based on a quotient of the ninth parameter and the eighth parameter, and the fourteenth parameter is determined based on a quotient of the first parameter and the eleventh parameter.

**103.**
The network device of claim 102, wherein the twelfth parameter is determined based on a following formula:

$$\left\lfloor N \cdot M \cdot \frac{k}{n} \cdot B_j^u / \sum_{i=0}^{k-1} B_i^u \right\rfloor,$$

wherein N represents the fourth parameter, M represents the fifth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u / \sum_{i=0}^{k-1} B_i^u$ represents the fourteenth parameter, both i and j are positive integers greater than or equal to 0 and less than k, u represents the carrier attribute, $\Sigma$ represents summation, and $\lfloor \cdot \rfloor$ represents rounding down.

**104.**
The network device of claim 91, wherein the PDCCH detection capability corresponding to the first carrier is determined based on a twelfth parameter, the twelfth parameter being determined based on the fourth parameter, the sixth parameter, a tenth parameter and a fourteenth parameter, wherein the tenth parameter is determined based on a quotient of the ninth parameter and the eighth parameter, and the fourteenth parameter is determined based on a quotient of the first parameter and the eleventh parameter.

**105.**
The network device of claim 104, wherein the twelfth parameter is determined based on a following formula:

$$\left\lfloor N \cdot C \cdot \frac{k}{n} \cdot B_j^u / \sum_{i=0}^{k-1} B_i^u \right\rfloor,$$

wherein N represents the fourth parameter, C represents the sixth parameter, n represents the eighth parameter, k represents the ninth parameter, $\frac{k}{n}$ represents the tenth parameter, $B_j^u$ represents the first parameter, $\sum_{i=0}^{k-1} B_i^u$ represents the eleventh parameter, $B_j^u / \sum_{i=0}^{k-1} B_i^u$ represents the fourteenth parameter, both i and j are positive integers greater than or equal to 0 and less than k, u represents the carrier attribute, $\Sigma$ represents

summation, and $\lfloor \cdot \rfloor$ represents rounding down.

**106.**

The network device of claim 91, wherein the PDCCH detection capability corresponding to the first carrier is determined based on a twelfth parameter, the twelfth parameter being determined based on a product of the fourth parameter, the fifth parameter, the second parameter and a tenth parameter, wherein the tenth parameter is determined based on a quotient of the ninth parameter and the eighth parameter.

**107.**

The network device of claim 106, wherein the twelfth parameter is determined based on a following formula:

$$\left\lfloor N \cdot M \cdot \frac{k}{n} \cdot \beta_j \right\rfloor,$$

wherein N represents the fourth parameter, M represents the fifth parameter, n represents the eighth parameter, k represents the ninth parameter, $\frac{k}{n}$ represents the tenth parameter, $\beta_j$ represents the second parameter, j is a positive integer greater than or equal to 0 and less than k, and $\lfloor \cdot \rfloor$ represents rounding down.

**108.**

The network device of claim 91, wherein the PDCCH detection capability corresponding to the first carrier is determined based on a twelfth parameter, the twelfth parameter being determined based on a product of the fourth parameter, the sixth parameter, the second parameter and a tenth parameter, wherein the tenth parameter is determined based on a quotient of the ninth parameter and the eighth parameter.

**109.**

The network device of claim 108, wherein the twelfth parameter is determined based on a following formula:

$$\left\lfloor N \cdot C \cdot \frac{k}{n} \cdot \beta_j \right\rfloor,$$

wherein N represents the fourth parameter, C represents the sixth parameter, n represents the eighth parameter, k represents the ninth parameter, $\frac{k}{n}$ represents the tenth parameter, $\beta_j$ represents the second parameter, j is a positive integer greater than or equal to 0 and less than k, and $\lfloor \cdot \rfloor$ represents rounding down.

**110.**

The network device of any one of claims 85 to 109, wherein the PDCCH detection capability corresponding to the first carrier is determined based on only the third parameter.

**111.** The network device of any one of claims 85 to 110, wherein the carrier attribute comprises one or more of:

a subcarrier spacing; and
a type of the PDCCH detection;
wherein the type of the PDCCH detection comprises: detection in units of slots or detection in units of spans.

**112.**

The network device of any one of claims 85 to 111, wherein the second parameter is determined based on configuration information of a network device.

**113.**

A terminal device, comprising a transceiver, a memory and a processor, wherein the memory is configured to store a program, and the processor is configured to invoke the program in the memory and control the transceiver to receive or send a signal, to enable the terminal device to perform the method of any one of claims 1 to 28.

**114.**

A network device, comprising a transceiver, a memory and a processor, wherein the memory is configured to store a program, and the processor is configured to invoke the program in the memory and control the transceiver to receive or send a signal, to enable the network device to perform the method of any one of claims 29 to 56.

**115.**

A device, comprising a processor configured to invoke a program from a memory, to enable the device to perform the method of any one of claims 1 to 28 or the method of any one of claims 29 to 56.

**116.**

A chip, comprising a processor configured to invoke a program from a memory, to enable a device on which the chip is mounted to perform the method of any one of claims 1 to 28 or the method of any one of claims 29 to 56.

**117.**

A computer-readable storage medium having stored thereon a program that causes a computer to perform the method of any one of claims 1 to 28 or the method of any one of claims 29 to 56.

**118.**

A computer program product comprising a program that causes a computer to perform the method of any one of claims 1 to 28 or the method of any one of claims 29 to 56.

**119.**

A computer program that causes a computer to perform the method of any one of claims 1 to 28 or the method of any one of claims 29 to 56.

100

110

120

**FIG. 1**

A terminal device determines a PDCCH detection capability corresponding to a first carrier among multiple carriers according to one or more of: a first parameter, a second parameter, and a third parameter

210

**FIG. 2**

A network device determines a corresponding PDCCH detection capability when a terminal device performs detection on a first carrier among multiple carriers, according to one or more of: a first parameter, a second parameter, and a third parameter

310

**FIG. 3**

Terminal device 400

Determining module 410

Receiving module 420

**FIG. 4**

Network device 500

Determining module 510

Sending module 520

**FIG. 5**

Device 600

Processor
610

Memory
620

Transceiver
630

**FIG. 6**

## INTERNATIONAL SEARCH REPORT

| International application No. |
| --- |
| **PCT/CN2023/121170** |

### A. CLASSIFICATION OF SUBJECT MATTER

H04W72/04(2023.01)i

According to International Patent Classification (IPC) or to both national classification and IPC

### B. FIELDS SEARCHED

Minimum documentation searched (classification system followed by classification symbols)

IPC:H04W,H04Q,H04L

Documentation searched other than minimum documentation to the extent that such documents are included in the fields searched

Electronic data base consulted during the international search (name of data base and, where practicable, search terms used)

CNTXT, WPABS, ENTXTC, CNKI, 3GPP: 载波, 物理下行控制信道, 检测能力, 带宽, 系数, 目标, 属性, 数量, 数目, 参数, 非重叠, 控制信道元素, carrier, PDCCH, detect, monitor, ability, band, width, BW, coefficient, target, attribute, amount, number, parameter, non-overlap, CCE

### C. DOCUMENTS CONSIDERED TO BE RELEVANT

| Category* | Citation of document, with indication, where appropriate, of the relevant passages | Relevant to claim No. |
| --- | --- | --- |
| X | US 2021037502 A1 (MEDIATEK INC.) 04 February 2021 (2021-02-04) description, paragraphs 21-106, and figures 1-11 | 1-3, 5, 7, 8, 10, 12, 14, 16-18, 20, 22, 24, 26-31, 33, 35, 36, 38, 40, 42, 44-46, 48, 50, 52, 54-59, 61, 63, 64, 66, 68, 70, 72-74, 76, 78, 80, 82-87, 89, 91, 92, 94, 96, 98, 100-102, 104, 106, 108, 110-119 |
| A | CN 109196929 A (GUANGDONG OPPO MOBILE COMMUNICATIONS CO., LTD.) 11 January 2019 (2019-01-11) entire document | 1-119 |
| A | WO 2021062879 A1 (GUANGDONG OPPO MOBILE TELECOMMUNICATIONS CORP., LTD.) 08 April 2021 (2021-04-08) entire document | 1-119 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 November 2023** | **20 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/121170** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 113615108 A (GUANGDONG OPPO MOBILE COMMUNICATIONS CO., LTD.) 05 November 2021 (2021-11-05)<br>entire document | 1-119 |
| A | CN 114745077 A (GUANGDONG OPPO MOBILE COMMUNICATIONS CO., LTD.) 12 July 2022 (2022-07-12)<br>entire document | 1-119 |
| A | US 2022225329 A1 (GUANGDONG OPPO MOBILE TELECOMMUNICATIONS CORP., LTD.) 14 July 2022 (2022-07-14)<br>entire document | 1-119 |

Form PCT/ISA/210 (second sheet) (July 2022)

**INTERNATIONAL SEARCH REPORT**
**Information on patent family members**

International application No.

**PCT/CN2023/121170**

| Patent document cited in search report | | | Publication date (day/month/year) | Patent family member(s) | | | Publication date (day/month/year) |
|---|---|---|---|---|---|---|---|
| US | 2021037502 | A1 | 04 February 2021 | US | 2022217683 | A1 | 07 July 2022 |
| | | | | US | 11743867 | B2 | 29 August 2023 |
| | | | | US | 11317379 | B2 | 26 April 2022 |
| CN | 109196929 | A | 11 January 2019 | ZA | 201808155 | B | 28 August 2019 |
| | | | | WO | 2018018500 | A1 | 01 February 2018 |
| | | | | SG | 11201810821 | SA | 30 January 2019 |
| | | | | AU | 2016416734 | A1 | 20 December 2018 |
| | | | | AU | 2016416734 | B2 | 27 January 2022 |
| | | | | EP | 3445111 | A1 | 20 February 2019 |
| | | | | EP | 3445111 | A4 | 10 April 2019 |
| | | | | EP | 3445111 | B1 | 24 May 2023 |
| | | | | MX | 2019000083 | A | 02 May 2019 |
| | | | | KR | 20190034147 | A | 01 April 2019 |
| | | | | TW | 201804751 | A | 01 February 2018 |
| | | | | BR | 112018076557 | A2 | 02 April 2019 |
| | | | | RU | 2716744 | C1 | 16 March 2020 |
| | | | | JP | 2019527944 | A | 03 October 2019 |
| | | | | JP | 7053501 | B2 | 12 April 2022 |
| | | | | US | 2020314631 | A1 | 01 October 2020 |
| | | | | US | 11064350 | B2 | 13 July 2021 |
| | | | | CA | 3026448 | A1 | 01 February 2018 |
| | | | | CA | 3026448 | C | 23 November 2021 |
| WO | 2021062879 | A1 | 08 April 2021 | None | | | |
| CN | 113615108 | A | 05 November 2021 | None | | | |
| CN | 114745077 | A | 12 July 2022 | None | | | |
| US | 2022225329 | A1 | 14 July 2022 | WO | 2021062879 | A1 | 08 April 2021 |
| | | | | EP | 4021110 | A1 | 29 June 2022 |
| | | | | EP | 4021110 | A4 | 14 September 2022 |

Form PCT/ISA/210 (patent family annex) (July 2022)